# EUROPEAN PATENT APPLICATION

(11) **EP 4 657 653 A1**
(43) Date of publication of application: **03.12.2025**
(21) Application number: 24764166.5
(22) Date of filing: 27.02.2024
(51) Int. Cl.: H01Q 1/24, H01Q 1/38, H01Q 13/10, H01Q 5/25, H04M 1/02

(54) **ELECTRONIC DEVICE INCLUDING ANTENNA**

(30) Priority: 27.02.2023 KR 20230026206; 04.05.2023 KR 20230058603
(71) Applicant: Samsung Electronics Co., Ltd., Suwon-si, Gyeonggi-do 16677 (KR)
(72) Inventor: LEE, Sangmok, Suwon-si, Gyeonggi-do 16677 (KR); SEO, Mincheol, Suwon-si, Gyeonggi-do 16677 (KR); YU, Changha, Suwon-si, Gyeonggi-do 16677 (KR); KANG, Woosuk, Suwon-si, Gyeonggi-do 16677 (KR); PARK, Gyubok, Suwon-si, Gyeonggi-do 16677 (KR); CHUN, Jaebong, Suwon-si, Gyeonggi-do 16677 (KR)
(74) Representative: HGF
(86) International application number: PCT/KR2024/002504
(87) International publication number: WO 2024/181767

(57) **Abstract**

According to an exemplary embodiment of the present disclosure, an electronic device is provided. The electronic device includes a frame and a wireless communication circuit, the frame includes a side forming at least a portion of a lateral surface of the electronic device, and a support part extending from the side and located inside the electronic device, the frame includes a conductive area extending from a portion included in the side to another portion included in the support part, the wireless communication circuit is configured to transmit and/or receive a signal in a selected or designated frequency band through the conductive area, and the conductive area includes a first opening located on the side and a second opening located on the support part.

## Description

### [Technical Field]

The disclosure relates to an electronic device including an antenna.

### [Background Art]

An electronic device may include a plurality of antennas to support various communication technologies. As the range of available applications expands, the number of antennas included in electronic devices is increasing.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

As electronic devices become slimmer, it is becoming more difficult to design antennas within a limited space to ensure antenna radiating performance or coverage (i.e., communication range) for a desired frequency band while reducing electromagnetic influence on various components within the electronic device.

Various embodiments of the disclosure provide an electronic device including an antenna configured to ensure or improve antenna radiating performance and/or coverage. Various examples of the disclosure are provided to solve or at least alleviate the above-mentioned problems.

The technical problems to be addressed by this disclosure are not limited to those described above, and other technical problems not mentioned above may be understood by a person ordinarily skilled in the related art to which the disclosure pertains.

### [Solution to Problem]

According to an exemplary embodiment of the disclosure, an electronic device is provided. The electronic device includes a frame and a wireless communication circuit. The frame includes a side portion configured to form at least a portion of a side surface of the electronic device, and a support portion extending from the side portion and positioned inside the electronic device. The frame includes a conductive region extending from one portion included in the side portion to another portion included in the support portion. The wireless communication circuit is configured to transmit and/or receive a signal of a selected or predetermined frequency band through the conductive region. The conductive region includes a first opening positioned in the side portion and a second opening positioned in the support portion.

### [Advantageous Effects of Invention]

An electronic device including an antenna according to exemplary embodiments of the disclosure may ensure or improve antenna radiating performance and/or coverage.

In addition, effects that may be obtained or predicted by various embodiments of the disclosure will be directly or implicitly disclosed in the detailed description of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a block diagram of an electronic device according to an embodiment of the disclosure in a network environment.
FIG. 2 is a view illustrating a slidable electronic device according to an embodiment of the disclosure in a closed state.
FIG. 3 is a view illustrating the slidable electronic device according to an embodiment of the disclosure in an open state.
FIG. 4 is a view illustrating an exploded perspective view of a slidable electronic device and a cross-sectional view of a display assembly according to an embodiment of the disclosure.
FIG. 5 is an exploded perspective view of the slidable electronic device according to an embodiment of the disclosure.
FIG. 6 is a perspective view of a slidable electronic device in an open state, according to an embodiment of the disclosure.
FIG. 7 is a perspective view of the slidable electronic device in an open state with a second cover separated, according to an embodiment of the disclosure.
FIG. 8 is a view illustrating a portion of the slidable electronic device according to an embodiment of the disclosure.
FIG. 9 is a view illustrating a heat map representing a current distribution of a conductive region and beam patterns of the conductive region, according to an embodiment of the disclosure.
FIG. 10 is a perspective view of a third key input module according to an embodiment of the disclosure.
FIG. 11 is a block diagram of a slider-type electronic device according to an embodiment of the disclosure.
FIG. 12 is a view illustrating graphs representing antenna radiating performance of a first conductive region including a first opening in accordance with the position of a feeding point, according to various embodiments of the disclosure.
FIG. 13 is a view illustrating a partial perspective view of a slidable electronic device according to an embodiment of the disclosure, a partial perspective view of a slidable electronic device according to a first comparative example, a partial perspective view of a slidable electronic device according to a second comparative example, and graphs and radiating patterns representing the antenna radiating performance of the respective slidable electronic devices.
FIG. 14 is a view illustrating slidable electronic devices according to various embodiments of the disclosure.
FIGS. 15 and 16 are views illustrating a portion of a slidable electronic device according to an embodiment of the disclosure.
FIG. 17 is a block diagram of a slider-type electronic device according to an embodiment of the disclosure.
FIGS. 18 and 19 are views illustrating a portion of a slidable electronic device according to an embodiment of the disclosure.
FIG. 20 is a block diagram of a slider-type electronic device according to an embodiment of the disclosure.

### [Mode for the Invention]

Hereinafter, various example embodiments of the disclosure disclosed herein will be described in greater detail with reference to the accompanying drawings.

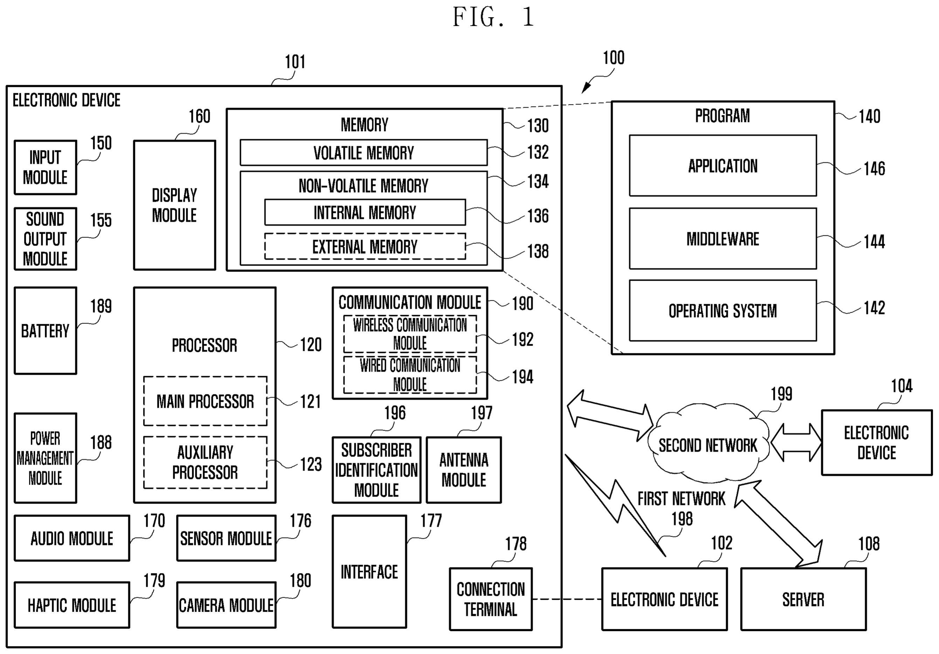

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

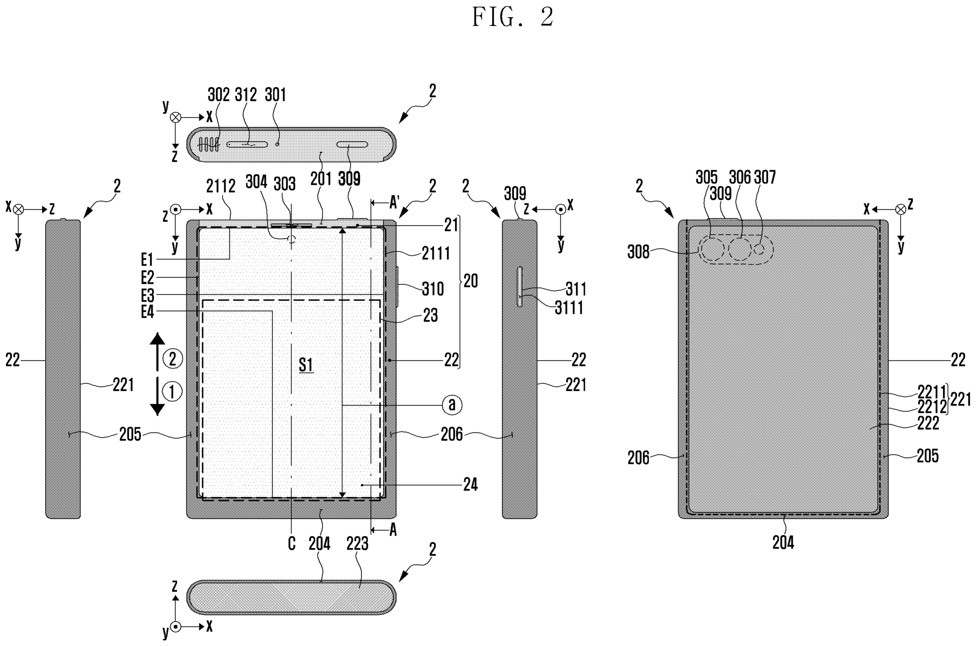

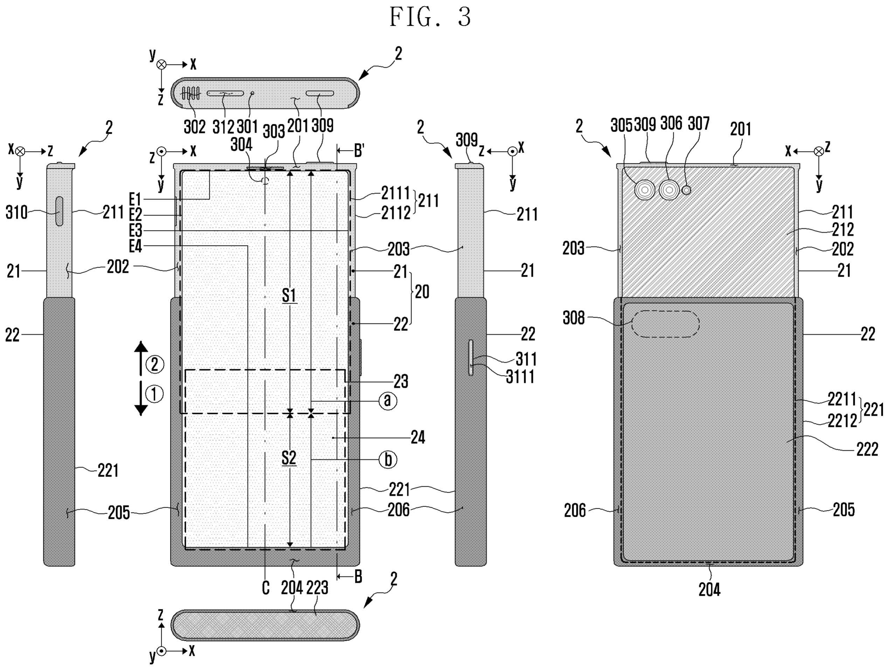

FIG. 2 illustrates a slidable electronic device 2 according to an embodiment of the disclosure in a closed state. FIG. 3 illustrates the slidable electronic device 2 according to an embodiment of the disclosure in an open state. It is to be understood that the disclosure conceives and includes all of the combinations of features and/or embodiments disclosed with reference to FIGS. 2 and 3. That is, all of the combinations of features described below with reference to FIGS. 2 and 3 are to be considered as being included in the disclosure as specific examples.

In various embodiments of the disclosure, for convenience of description, the direction in which a screen (e.g., an externally visible display region or active region of the flexible display module 24) is visible (e.g., the +z-axis direction) is referred to as the front of the slidable electronic device 2, and the opposite direction (e.g., the -z-axis direction) is referred to as the rear of the slidable electronic device 2.

Referring to FIGS. 2 and 3, the slidable electronic device 2 may include a slidable housing 20 and a flexible display module 24.

According to an embodiment, the slidable housing 20 may include a first housing (or first housing part or first housing structure) 21, and a second housing (or second housing part or second housing structure) 22. The second housing 22 may be connected to the first housing 21 to be slidable relative to the first housing 21. The sliding of the second housing 22 relative to the first housing 21 refers to a change in the relative position between the first housing 21 and the second housing 22, and may be interpreted as the sliding of the first housing 21 relative to the second housing 22 or as mutual sliding between the first housing 21 and the second housing 22.

According to an embodiment, the flexible display module 24 may include a first region ⓐ and a second region ⓑ extending from the first region ⓐ. The first region ⓐ may be interpreted as a portion of the flexible display module 24 that is located in the slidable electronic device 2 to be visible from the outside. The second region ⓑ may be interpreted as a portion of the flexible display module 24 that is located in the slidable electronic device 2 to be slid in/slid out (e.g., enter and exit) the inner space of the slidable electronic device 2. For example, the first region ⓐ may be located in the slidable housing 20 to be visible from the outside, and the second region ⓑ may be slid in or slid out according to mutual sliding between the first housing 21 and the second housing 22. As a specific example to aid understanding of the visual exposure of the first region ⓐ and slide-in/out of the second region ⓑ, a combination of the flexible display module 24 and a sliding-type structural element (e.g., the slidable housing 20) is presented, but it is to be construed that combinations of flexible display modules and structural elements in modified or altered forms, in addition to the disclosed examples, are included in the scope of various embodiments of the disclosure.

According to an embodiment, the first region ⓐ of the flexible display module 24 may be positioned to correspond to the first housing 21, and the second region ⓑ of the flexible display module 24 may be positioned to correspond to the second housing 22. The first region ⓐ may be disposed in the first housing 21 and supported by the first housing 21. The first region ⓐ may be exposed to the outside of the slidable electronic device 2, and the slidable electronic device 2 may provide a first screen region S1 through the first region ⓐ. The second region ⓑ may be supported by the second housing 22 that is slidable relative to the first housing 21. When the second housing 22 slides in the first direction ① (e.g., the +y axis direction) relative to the first housing 21, at least a portion of the second region ⓑ may be pulled out from the space of the second housing 22 to the outside (a position on the slidable electronic device 2 visible from the outside) to be visible. When the second housing 22 slides in the second direction ② (e.g., the -y-axis direction), which is opposite to the first direction ①, relative to the first housing 21, at least a portion of the second region ⓑ may be slid into the space of the second housing 22 to be hidden. The slidable electronic device 2 may provide a screen region in which a second screen region (or second display region) S2 is added to the first screen region (or first display region) S1 by at least a portion of the second region ⓑ pulled out to the outside. The ratio of the portion of the second region ⓑ that is pulled out to the outside and the size of the screen corresponding thereto may vary depending on the position or distance where the second housing 22 is slid relative to the first housing 21.

According to an embodiment, FIG. 2 illustrates the slidable electronic device 2 in the state in which the screen is not expanded, and FIG. 3 illustrates the slidable electronic device 2 in the state in which the screen is expanded. The state in which the screen is not expanded is the state in which the second housing 22 is not moved in the first direction ① relative to the first housing 21, and may be defined and interpreted as the "closed state" of the slidable electronic device 2. The state in which the screen is expanded is the state in which the second housing 22 is moved to its maximum in the first direction ① where it is no longer movable, and may be defined or interpreted as the "open state" of the slidable electronic device 2.

According to an embodiment, the open state of the slidable electronic device 2 may include a fully open state (see FIG. 3) or an intermediate state. The intermediate state may refer to a state between the closed state (see FIG. 2) and the fully open state.

According to an embodiment, when the second housing 22 is moved at least partially in the first direction ① relative to the first housing 21, this may be defined or interpreted as the "slide-out" of the second housing 22 or the flexible display module 24. When the second housing 22 is moved at least partially in the second direction ②, which is opposite to the first direction ①, relative to the first housing 21, this may be defined or interpreted as the "slide-in" of the second housing 22 or the flexible display module 24.

According to various embodiments, the slidable electronic device 2, which provides the expandable screen in response to mutual sliding between the first housing 21 and the second housing 22, may be referred to by other terms such as "stretchable electronic device" or "rollable electronic device." The flexible display module 24 (or flexible display) may be referred to as other terms such as an "expandable display," a "slidable display," or a "slide-out display."

In the disclosure, "slide-out or slide-in of the second housing 22" or "sliding of the second housing 22 relative to the first housing 21" is described. However, the disclosure is not limited thereto, and slide-out or slide-in of the first housing 21 relative to the second housing 22, sliding of the first housing 21 relative to the second housing 22, mutual sliding between the first housing 21 and the second housing 22, or a change in relative position between the first housing 21 and the second housing 22 may also be described.

According to an embodiment, in the open state of the slidable electronic device 2 (see FIG. 3), a screen including the first screen region S1 provided by the first region ⓐ of the flexible display module 24 and the second screen region S2 provided by the second region ⓑ of the flexible display module 24 may be provided in a substantially planar form. The direction in which the front surface of the slidable electronic device 2 is oriented may be the direction in which the planar screen is oriented. The first region ⓐ of the flexible display module 24 may be disposed on the first housing 21 to be substantially flat, and the first region ⓐ may provide the planar first screen region S1 corresponding thereto.

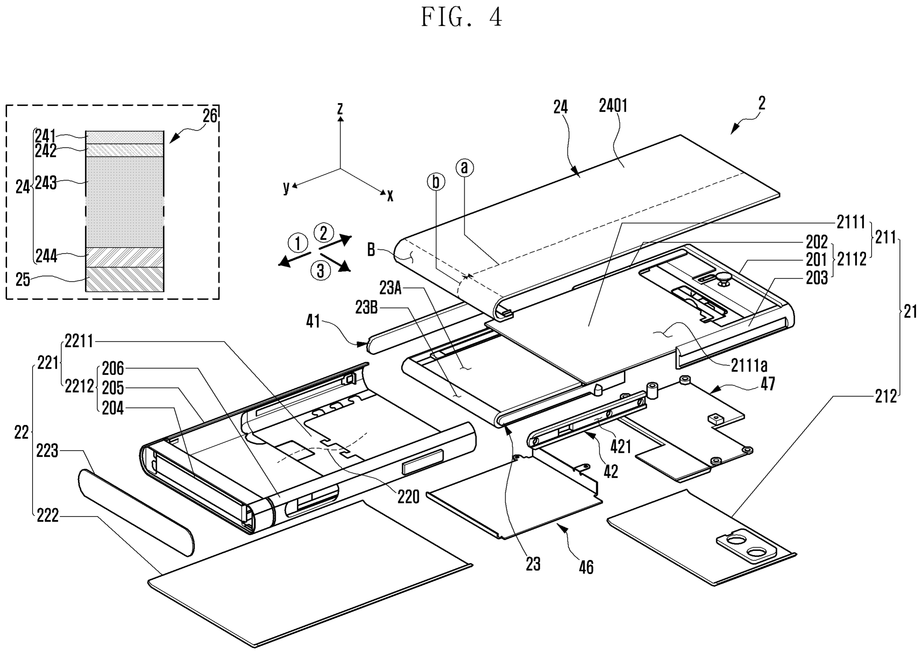

According to an embodiment, the second region ⓑ of the flexible display module 24 may be disposed to have a bending portion (e.g., the bending portion B in FIG. 4). The bending portion may be a portion of the second region ⓑ that is disposed and maintained in a bent form such that the second region ⓑ changes direction and moves when the second housing 22 is slid relative to the first housing 21. The portion of the second region ⓑ that provides the bending portion may vary depending on the position or distance where the second housing 22 is slid relative to the first housing 21, but the shape of the bending portion may be provided substantially the same. The size of the portion between the bending portion of the second region ⓑ and the first region ⓐ may increase when the second housing 22 is slid out, and may decrease when the second housing 22 is slid in. In the open state of the slidable electronic device 2, the second screen region S2 may be provided by the portion between the bending portion of the second region ⓑ and the first region ⓐ. The portion between the bending portion of the second region ⓑ and the first region ⓐ may be disposed substantially flat and smoothly connected to the first region ⓐ without lifting.

According to an embodiment, a slidable electronic device 2 may include a tensioning device (not separately illustrated) configured to allow a portion of the second region ⓑ between a bending portion (e.g., the bending portion B in FIG. 4) and the first region ⓐ to be substantially flat in an open state, while reducing a lifting phenomenon caused by the elasticity of the flexible display module 24.

According to an embodiment, a screen of the slidable electronic device 2 may be provided in a rectangular shape and may include, for example, a first edge E1, a second edge E2, a third edge E3, and a boundary E4 with the bending portion (e.g., the bending portion B in FIG. 4) of the second region ⓑ. When viewed from above the screen, the first edge E1 may be positioned to be spaced apart from the boundary E4 with the bending portion in the second direction ② (e.g., the slide-in direction) and may be substantially parallel to the boundary E4 with the bending portion. The second edge E2 may extend from one end of the first edge E1 to the boundary E4 with the bending portion and may be substantially perpendicular to the first edge E1. The third edge E3 may extend from the other end of the first edge E1 to the boundary E4 with the bending portion and may be substantially parallel to the second edge E2. When the second housing 22 slides out, due to the expansion of the screen, the distance of the boundary E4 with the bending portion from the first edge E1 in the first direction ① may increase, and the second edge E2 and the third edge E3 may become longer.

According to an embodiment, the first housing 21 may include a first frame (or first frame structure, first framework, or first case) 211 and/or a first cover 212.

According to an embodiment, the first frame 211 may be a structural component configured to place and/or support a plurality of electrical components (or functional components) and/or one or more members.

According to an embodiment, the first frame 211 may include a first support portion 2111 and a first side portion (or first side wall portion, first bezel, first side wall bezel, or a first side wall bezel structure) 2112 connected to the first support portion 2111.

According to an embodiment, the first region ⓐ of the flexible display module 24 may be disposed on the first support portion 2111, and the first support portion 2111 may support the first region ⓐ.

According to an embodiment, the first side portion 2112 may include a first side wall 201, a second side wall 202, and/or a third side wall 203. The first side wall 201 may be positioned to correspond to the first edge E1 of the screen. The second side wall 202 may be positioned to correspond to the second edge E2 of the screen. The third side wall 203 may be positioned to correspond to the third edge E3 of the screen. When viewed from above on the front surface of the slidable electronic device 2, the second side wall 202 may extend in the first direction ① from one end of the first side wall 201 (e.g., in the slide-out direction), and the third side wall 203 may extend from the other end of the first side wall 201 in the first direction ①. When viewed from above the front surface of the slidable electronic device 2, the second side wall 202 and the third side wall 203 may be substantially parallel to each other and may be substantially perpendicular to the first side wall 201.

According to an embodiment, the first frame 211 may be provided (formed) as an integrated or single structure (e.g., a single continuous structure or complete structure) including the first support portion 2111 and the first side portion 2112.

According to various embodiments, the first support portion 2111 and the first side portion 2112 may be connected to each other through mechanical fastening such as screw fastening, or bonding using an adhesive material (or bonding material).

According to various embodiments, the first support portion 2111 may be defined or interpreted as a component separate from the first housing 21.

According to an embodiment, the first cover 212 may be disposed on or coupled to the first frame 211 and may be positioned on a rear side of the slidable electronic device 2. The first cover 212 may be referred to as a "first back" or "first rear surface plate."

According to an embodiment, the first cover 212 may be coupled to the first frame 211 through mechanical fastening such as screw fastening, or bonding using an adhesive material (or bonding material).

According to various embodiments, the first cover 212 may be defined or interpreted as a component separate from the first housing 21.

According to an embodiment, the second housing 22 may include a second frame (or second frame structure, second framework, or second case) 221, a second cover 222, and/or a third cover 223.

According to an embodiment, the second frame 221 may be a structural component configured such that multiple electrical components (also referred to as functional components) and/or one or more members are disposed and/or supported thereon.

According to an embodiment, the second frame 221 may include a second support portion 2211 and a second side portion (or second side wall portion, second bezel, a second side wall bezel, or second side wall bezel structure) 2212 connected to the second support portion 2211. A combination of the second support portion 2211 and the second side portion 2212 may provide (or form) a space capable of accommodating the first housing 21.

According to an embodiment, the second frame 221 may be provided (or formed) as an integrated or single structure (e.g., a single continuous structure or a complete structure) including the second support portion 2211 and the second side portion 2212.

According to various embodiments, the second support portion 2211 and the second side portion 2212 may be connected to each other through mechanical fastening such as screw fastening, or bonding using an adhesive material (or bonding material).

According to various embodiments, the second support portion 2211 may be defined or interpreted as a component separate from the second housing 22.

According to an embodiment, when viewed from above the rear surface of the slidable electronic device 2 (e.g., viewed in the +z-axis direction), an overlapping region of the first support portion 2111 of the first frame 211 and the second support portion 2211 of the second frame 221 may increase when the second housing 22 slides in, and may decrease when the second housing 22 slides out.

According to an embodiment, the second side portion 2212 may include, for example, a fourth side wall 204, a fifth side wall 205, and/or a sixth side wall 206. The fourth side wall 204 may be positioned to be spaced apart from the first side wall 201 in the first direction ① (e.g., the slide-out direction), and may be substantially parallel to the first side wall 201. When viewed from above the front surface of the slidable electronic device 2 (e.g., when viewed in the -z-axis direction), the fifth side wall 205 may be positioned to correspond to the second side wall 202, and may extend from one end of the fourth side wall 204 in the second direction ② (e.g., the slide-in direction). The sixth side wall 206 may be positioned to correspond to the third side wall 203, and may extend from the other end of the fourth side wall 204 in the second direction ②. When viewed from above the front surface of the slidable electronic device 2, the fifth side wall 205 and the sixth side wall 206 may be substantially parallel to each other, and may be substantially perpendicular to the fourth side wall 204. The distance of the fourth side wall 204 from the first side wall 201 in the first direction ①, the region where the fifth side wall 205 covers the second side wall 202, and the region where the sixth side wall 206 covers the third side wall 203 may increase when the second housing 22 slides in and decrease when the second housing 22 slides out.

According to an embodiment, the second cover 222 may be disposed on or coupled to the second support portion 2211 and may be positioned on a rear side of the slidable electronic device 2. The second cover 222 may be referred to as a "second back" or "second rear surface plate."

According to an embodiment, the second cover 222 may be coupled to the second support 2211 through mechanical fastening such as screw fastening, or bonding using an adhesive material (or bonding material).

According to an embodiment, when viewed from above the rear surface of the slidable electronic device 2 (e.g., viewed in the +z-axis direction), an overlapping region of the first cover 212 (or the first support portion 2111) and the second cover 222 (or the second support portion 2211) may increase when the second housing 22 slides in, and may decrease when the second housing 22 slides out.

According to various embodiments, the second cover 222 may be defined or interpreted as a component separate from the second housing 22.

According to an embodiment, the third cover 223 may be disposed on or coupled to the fourth side wall 204 of the second side portion 2212 and located on a side surface of the slidable electronic device 2. The third cover 223 may be referred to as a "side cover."

According to various embodiments, the third cover 223 may be omitted, and the second side portion 2212 may be provided (or formed) in a shape (not separately illustrated) that further includes a portion corresponding to the third cover 223.

According to an embodiment, in a closed state of the slidable electronic device 2, a portion of the outer surface of the slidable electronic device 2 formed by the slidable housing 20 may be provided by the first side wall 201 and the second housing 22. In the closed state of the slidable electronic device 2, the remaining portion of the first housing 21 may be covered by the second housing 22 and thus may not be exposed to the outside. When the slidable electronic device 2 transitions from the closed state to the open state, a portion of the outer surface of the slidable electronic device 2 formed by the slidable housing 20 may further include an outer surface region provided by the second side wall 202, the third side wall 203, and the first cover 212.

According to various embodiments, although not illustrated separately, the slidable electronic device 2 may be implemented such that a portion of the first housing 21 protrudes in a second direction ② with respect to the second housing 22 in the closed state.

According to an embodiment, the combination of the first side portion 2112 of the first housing 21 and the second side portion 2212 of the second housing 22 may provide a bezel (or bezel structure, screen bezel, or screen bezel structure) surrounding the screen. For example, when the slidable electronic device 2 in the closed state is viewed from above the front surface thereof, the combination of the first side wall 201, the fourth side wall 204, the fifth side wall 205, and the sixth bezel 206 may provide a bezel surrounding the screen. For example, when the slidable electronic device 2 in the open state is viewed from above the front surface, a combination of the first side wall 201, the second side wall 202, the third side wall 203, the fourth side wall 204, the fifth side wall 205, and the sixth side wall 206 may provide a bezel surrounding the screen.

According to an embodiment, the slidable electronic device 2 may include a third frame (or third frame structure, third framework, third case, or third support portion) 23 positioned in the space of the second housing 22. The third frame 23 may be a structural component configured such that multiple electrical components (also referred to as functional components) and/or one or more members are disposed and/or supported thereon.

According to an embodiment, the third frame 23 may be connected with the second frame 221 of the second housing 22. The third frame 23 may be connected, for example, to the fifth side wall 205 and the sixth side wall 206 of the second side wall portion 2212. The third frame 23 may overlap the second support portion 2211 of the second frame 22 when viewed from above the screen of the slidable electronic device 2.

According to an embodiment, the combination of the second housing 22 and the third frame 23 may be slidably connected to the first housing 21. A structure for mutually stable sliding between the combination of the second housing 22 and the third frame 23 and the first housing 21 (e.g., a sliding structure including a guide rail) may be provided for the first housing 21 and the second housing 22, or may be provided for the first housing 21 and the third frame 23. The "mutual sliding between the first housing 21 and the second housing 22" mentioned herein may be understood as substantially mutual sliding between the combination of the second housing 22 and the third frame 23 and the first housing 21.

According to an embodiment, the first housing 21 and the third frame 23 may be mutually slidably connected. In a movable assembly provided by the combination of the mutually slidably connected first frame 21 and third frame 23, and a flexible display module 24 operatively arranged thereon, the second housing 22 may provide the exterior of the slidable electronic device 2 together with the first housing 21. In various embodiments, the first housing 21 and the second housing 22 may be defined or interpreted as an "outer housing" that substantially provides the exterior of the slidable electronic device 2, and the third frame 23 may be defined or interpreted as an "inner housing" or "third housing" that is located and hidden inside the slidable electronic device 2 to correspond to the second housing 22.

According to various embodiments, the third frame 23 may be defined or interpreted as a portion of the second housing 22. A portion of the second housing 22 including the second frame 221, the second cover 222, and the third cover 223 may be referred to as a term, such as an "exterior portion," a "cover portion," or an "exterior housing portion," and the third frame 23 may be referred to as another term such as a "support," an "inner support," a "support portion," an "inner support portion," a "support member," an "inner support member," a "support structure," or an "inner support structure" accommodated in the second housing 22.

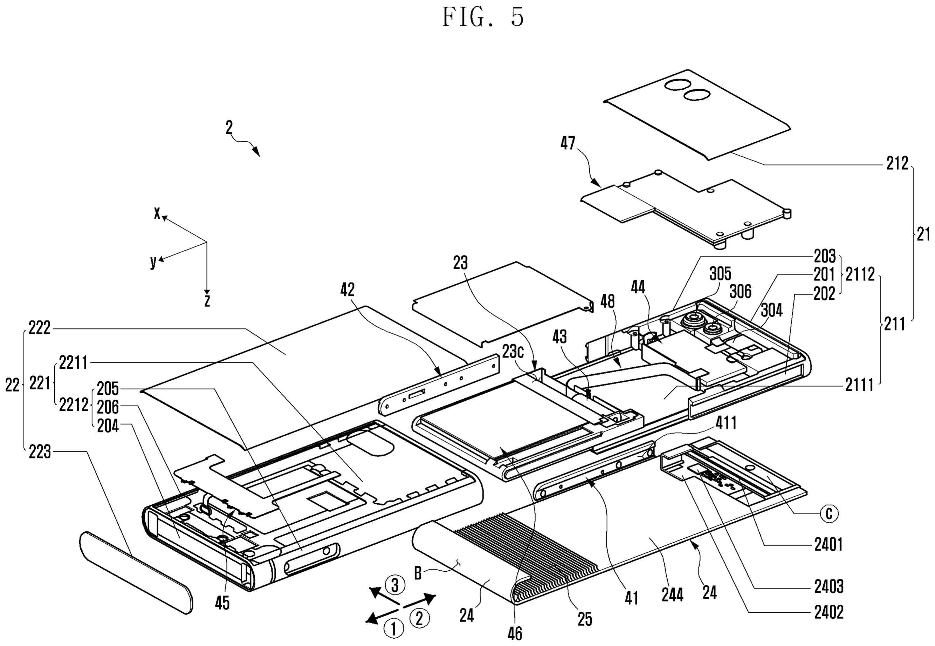

According to an embodiment, the third frame 23 may include a first support surface (e.g., the first support surface 23A in FIG. 4) facing the front surface of the slidable electronic device 2, a second support surface (e.g., the second support surface 23B in FIG. 4) corresponding to the bending portion (e.g., the bending portion B in FIG. 4) of the second region ⓑ included in the flexible display module 24, and a third support surface facing the rear surface of the slidable electronic device 2 (e.g., the third support surface 23C in FIG. 5). The first support surface and the second support surface may support the second region ⓑ of the flexible display module 24. In various embodiments, the third frame 23 is an element that supports the second region ⓑ of the flexible display module 24, and may be referred to as various other terms such as a "display support," a "display support member," a "display support structure," a "display support plate," or a "display support board."

According to an embodiment, the first support surface (e.g., the first support surface 23A in FIG. 4) of the third frame 23 may support a portion of the second region ⓑ of the flexible display module 24 that provides the second screen region S2.

According to an embodiment, the second support surface (e.g., the second support surface 23B in FIG. 4) of the third frame 23 may face the bending portion (e.g., the bending portion B in FIG. 4) of the flexible display module 24 and may include a curved surface corresponding to the bending portion. The second support surface may support the bending portion of the second region ⓑ.

According to an embodiment, the bending portion (e.g., the bending portion B in FIG. 4) of the flexible display module 24 may be positioned between the second support surface (e.g., the second support surface 23B in FIG. 4) of the third frame 23 and the fourth side wall 204 of the second frame 221. One surface of the fourth side wall 204 facing the bending portion of the flexible display module 24 may include a curved surface corresponding to the bending portion of the flexible display 24. When the second housing 22 is slid out, at least a portion of the second region ⓑ included in the flexible display module 24 may be withdrawn (e.g., to a position visible from the outside in the slidable electronic device 2) from the space between the second support portion 2211 of the third frame 23 and the second frame 221, through the curved space between the second support surface of the third frame 23 and the fourth side wall 204 of the second frame 221. When the second housing 22 is slid in, at least a portion of the second region ⓑ included in the flexible display module 24 may be slid into the space between the second support portion 2211 of the third frame 23 and the second frame 221 from the outside through the curved space between the second support surface of the third frame 23 and the fourth side wall 204 of the second frame 221.

According to various embodiments, when viewed from above the rear surface of the slidable electronic device 2 in the state in which the second region ⓑ of the flexible display module 24 is at least partially introduced into the space between the third frame 23 and the second support portion 2211 of the second frame 221 (e.g., in the closed state of FIG. 2), an additional screen in which a portion of the second region ⓑ is visible through the first cover 212 of the first housing 21 may be provided. A region of the second support portion 2211 of the second housing 22 corresponding to the additional screen may be provided to be transparent or semi-transparent. In various embodiments, when a member is positioned between the second support portion 2211 of the second housing 22 and at least a portion of the second region ⓑ in the closed state of the slidable electronic device 2, a region of the member corresponding to the additional screen may include an opening or may be provided to be transparent or semi-transparent.

According to an embodiment, at least a portion of the first housing 21 or at least a portion of the second housing 22 may contain a metallic material and/or a non-metallic material. The first housing 21 or the second housing 22 may include, for example, at least one conductor (or conductive structure) (not illustrated separately) containing a metallic material, and at least one non-conductor (or non-conductive structure) (not illustrated separately) containing a non-metallic material and connected to the at least one conductor. The metallic material contained in the first housing 21 or the second housing 22 may vary and include, for example, magnesium, magnesium alloy, aluminum, aluminum alloy, zinc alloy, copper alloy, titanium, amorphous alloy, metal-ceramic composite (e.g., cermet), or stainless steel. The non-metallic material contained in the first housing 21 or the second housing 22 may vary and include, for example, ceramic or polymer.

According to an embodiment, at least a portion of at least one conductor (not separately illustrated) included in the first housing 21 or the second housing 22 may be electrically connected to a wireless communication circuit (e.g., the wireless communication module 192 in FIG. 1) included in the slidable electronic device 2 and may be utilized as an antenna radiator.

According to an embodiment, a sliding structure that allows mutual sliding between the first housing 21 and the second housing 22 of the slidable electronic device 2 may include a sliding driver (e.g., the sliding driver 43 in FIG. 4) capable of providing a driving force in response to an electrical signal. The sliding driver may include, for example, a motor and at least one gear operatively connected to the motor. The sliding driver may be implemented in a form (not separately illustrated) that includes various actuators such as a solenoid or a hydraulic cylinder. When a signal is generated through an input module included in the slidable electronic device 2, the sliding driver may provide a driving force to transition the slidable electronic device 2 between a closed state and an open state. For example, when a signal is generated through a hardware button or a software button provided on a screen, the slidable electronic device 2 may transition from the closed state to the open state, or from the open state to the closed state, via the sliding driver. In another example, when a signal is generated from various sensors such as a pressure sensor, the slidable electronic device 2 may transition from the closed state to the open state, or from the open state to the closed state, via the sliding driver.

According to an embodiment, the slidable electronic device 2 may include an audio input module (not separately illustrated), a first audio output module (not separately illustrated), a second audio output module (not separately illustrated), a sensor module (not separately illustrated), a first camera module 304, a second camera module 305, a third camera module 306, a light-emitting module 307, a first key input module 309, a second key input module 310, a third key input module 311, and/or a connection terminal 312.

According to an embodiment, the audio input module (not separately illustrated) may include a microphone (or mic) positioned inside the slidable electronic device 2 in correspondence with a microphone hole 301 provided (or formed) in the slidable housing 20. In the illustrated example, the microphone hole 301 may be provided in the first side wall 201. The positions or numbers of microphones and corresponding microphone holes 301 are not limited to the illustrated example and may vary.

According to an embodiment, a first audio output module (not separately illustrated) may include a first speaker (not separately illustrated) for multimedia playback (or playback of recorded audio), which is positioned inside the slidable electronic device 2 to correspond to a first speaker hole 302 provided (or formed) in the slidable housing 20. In the illustrated example, the first speaker hole 302 may be provided in the first side wall 201. The positions or numbers of first speakers and first speaker holes 302 corresponding to the first speakers are not limited to the illustrated example and may vary.

According to an embodiment, a second audio output module (not separately illustrated) may include a second speaker for voice calls (e.g., a receiver for calls) (not separately illustrated), which is positioned inside the slidable electronic device 2 to correspond to a second speaker hole 303 provided (or formed) in the slidable housing 20. In the illustrated example, the second speaker hole 303 (e.g., a receiver hole) may be provided in the first side wall 201. The positions or numbers of second speakers and second speaker holes 303 corresponding to the second speakers are not limited to the illustrated example and may vary.

According to various embodiments, a single hole (not separately illustrated) that replaces the microphone hole 301 and speaker holes (e.g., the first speaker hole 302 and/or the second speaker hole 303) may be provided (or formed).

According to various embodiments, the first speaker hole 302 may be omitted, and the first audio output module may include a first piezoelectric speaker.

According to various embodiments, the second speaker hole 303 may be omitted, and the second audio output module may include a second piezoelectric speaker.

According to an embodiment, the sensor module (not separately illustrated) may include an optical sensor (e.g., a proximity sensor and/or an illuminance sensor) positioned within the inner space of the slidable housing 20 to correspond to a screen. The optical sensor may be disposed to at least partially overlap the screen when viewed from above the front surface of the slidable electronic device 2. The optical sensor or its position may be substantially indistinguishable (or unexposed) visually. External light may reach the optical sensor through the screen.

According to an embodiment, a sensor module (e.g., an optical sensor) (not separately illustrated) may be positioned on the rear surface of the first region ⓐ included in the flexible display module 24 or under the first region ⓓ. The sensor module or the position of the sensor module may be visually indistinguishable (or unexposed).

According to an embodiment, a partial region of the first region ⓐ of the flexible display module 24 that at least partially overlaps the sensor module may include a different pixel structure and/or wiring structure compared to other regions. The pixel structure and/or wiring structure provided in the partial region of the first region ⓐ that at least partially overlaps the sensor module may reduce light loss between the outside and the sensor module. For example, the partial region of the first region ⓐ that at least partially overlaps the sensor module may have a different pixel density (e.g., the number of pixels per unit area) compared to other regions. For example, multiple pixels may be substantially not disposed in the partial region of the first region ⓐ that at least partially overlaps the sensor module.

According to various embodiments, a sensor module (e.g., an optical sensor) (not separately illustrated) may be aligned with and positioned in a recess (not separately illustrated) provided on the rear surface of the first region ⓐ included in the flexible display module 24 or may be at least partially inserted into the recess. The flexible display module 24 may include a combination of a transparent cover (not separately illustrated) and a flexible display (not separately illustrated). The transparent cover serves to protect the flexible display and may include a flexible film or a flexible plate such as a plastic film (e.g., a polyimide film) or ultra-thin glass (UTG). The flexible display may include a plurality of pixels. The recess provided (or formed) on the rear surface of the first region ⓐ may be implemented, for example, as an opening formed in the flexible display. The recess provided (or formed) on the rear surface of the first region ⓐ may also be implemented, for example, as a combination of openings provided in one or more of a plurality of layers included in the flexible display.

According to various embodiments, a variety of sensors (e.g., a biometric sensor), not limited to optical sensors such as a proximity sensor or an illuminance sensor, may be positioned on the rear surface of the first region ⓐ of the flexible display module 24 or under the first region ⓐ, or may be positioned to correspond to a recess provided in the first region ⓐ.

According to an embodiment, the first camera module 304 may be positioned to correspond to the front surface of the slidable electronic device 2. The first camera module 304 may be referred to as a "front camera module."

According to an embodiment, the first camera module 304 may be positioned inside the slidable electronic device 2 to correspond to the screen. The first camera module 304 may be disposed to at least partially overlap the screen when viewed from above the screen of the slidable electronic device 2. The first camera module 304 or the position of the first camera module 304 may be visually indistinguishable (or unexposed). External light may reach the first camera module 304 through the screen.

According to an embodiment, the first camera module 304 may be positioned on the rear surface of the first region ⓐ included in the flexible display module 24 or under the first region ⓐ. The first camera module 304 or the position of the first camera module 304 may be visually indistinguishable (or unexposed). The first camera module 304 may include a concealed display-rear camera (e.g., an under-display camera (UDC)).

According to an embodiment, in the first region ⓐ included in the flexible display module 24, a partial region, which at least partially overlaps the first camera module 304, may include a different pixel structure and/or wiring structure compared to other regions. The pixel structure and/or wiring structure provided in the partial region of the first region ⓐ that at least partially overlaps the first camera module 304 may reduce light loss between the outside and the first camera module 304. For example, the partial region of the first region ⓐ that at least partially overlaps the first camera module 304 may have a different pixel density (e.g., the number of pixels per unit area) compared to other regions. For example, multiple pixels may be substantially not disposed in the partial region of the first region ⓐ that at least partially overlaps the first camera module 304.

According to various embodiments, the first camera module 304 may be aligned with and positioned in a recess (not separately illustrated) provided on the rear surface of the first region ⓐ included in the flexible display module 24 or may be at least partially inserted into the recess.

According to various embodiments, the first camera module 304 may be positioned to correspond to a camera hole (not separately illustrated) formed in the first side wall 201 when viewed from above the front surface of the slidable electronic device 2.

According to various embodiments, the second camera module 305 and/or the third camera module 306 may be positioned in the first housing 21 to correspond to the first cover 212. According to an embodiment, the second camera module 305 may be referred to as a "first rear camera module," and the third camera module 306 may be referred to as a "second rear camera module."

According to an embodiment, the first cover 212 may include a first camera hole provided to correspond to the second camera module 305 and a second camera hole provided to correspond to the third camera module 306. The second camera module 305 may be positioned in the first housing 21 to correspond to the first camera hole. The third camera module 306 may be positioned in the first housing 21 to correspond to the second camera hole. The number or positions of camera modules (e.g., rear camera modules) positioned in the first housing 21 to correspond to the first cover 212 are not limited to the illustrated example and may vary.

According to an embodiment, the light-emitting module 307 may be positioned in the first housing 21 to correspond to a flash hole of the first cover 212. The light-emitting module 307 may include a light source (e.g., a flash) for the second camera module 305 and/or the third camera module 306. The first light-emitting module 307 may include, for example, a light-emitting diode (LED), an IR LED, or a xenon lamp.

According to various embodiments, the slidable electronic device 2 may include a light-emitting module (not separately illustrated) configured to indicate status information of the slidable electronic device 2 in the form of light and/or to be interlocked with the operation of the first camera module 304.

According to an embodiment, in the open state of the slidable electronic device 2, the second camera module 305, the third camera module 306, and the light-emitting module 307 may not overlap a portion of the second housing 22 including the second support portion 2211 and the second cover 222 when viewed from above the rear surface of the slidable electronic device 2, and may be exposed to the outside.

According to an embodiment, in the closed state of the slidable electronic device 2, a portion of the second housing 22 including the second support portion 2211 and the second cover 222 may overlap the second camera module 305, the third camera module 306, and the light-emitting module 307 when viewed from above the rear surface of the slidable electronic device 2. The portion of the second housing 22 including the second support portion 2211 and the second cover 222 may include a light transmission region 308 corresponding to the second camera module 305, the third camera module 306, and the light-emitting module 307. The light transmission region 308 may overlap the second camera module 305, the third camera module 306, and the light emitting module 307 in the closed state of the slidable electronic device 2. In the closed state of the slidable electronic device 26, external light may reach the second camera module 305 or the third camera module 306 through the light transmission region 308. In the closed state of the slidable electronic device 2, light output from the light-emitting module 307 may travel to the outside of the slidable electronic device 2 through the light transmission region 308.

According to various embodiments, the portion of the second housing 22 including the second support portion 2211 and the second cover 222 may include an opening in the form of a through-hole or a notch in place of the light transmission region 308.

According to various embodiments, although not illustrated separately, the slidable electronic device 2 may be implemented such that a portion of the first housing 21 protrudes in a second direction ② with respect to the second housing 22 in the closed state. The second camera module 305, the third camera module 306, and/or the light-emitting module 307 may be disposed in the first housing 21 so as to be exposed to the outside in the closed state of the slidable electronic device 2.

According to an embodiment, the first key input module 309 may include a first key positioned on the first side wall 201 and a first key signal generator (not separately illustrated) configured to generate a key signal in response to pressing or touching of the first key.

According to an embodiment, the second key input module 310 may include a second key positioned on the second side wall 202 and a second key signal generator (not separately illustrated) configured to generate a key signal in response to pressing or touching of the second key.

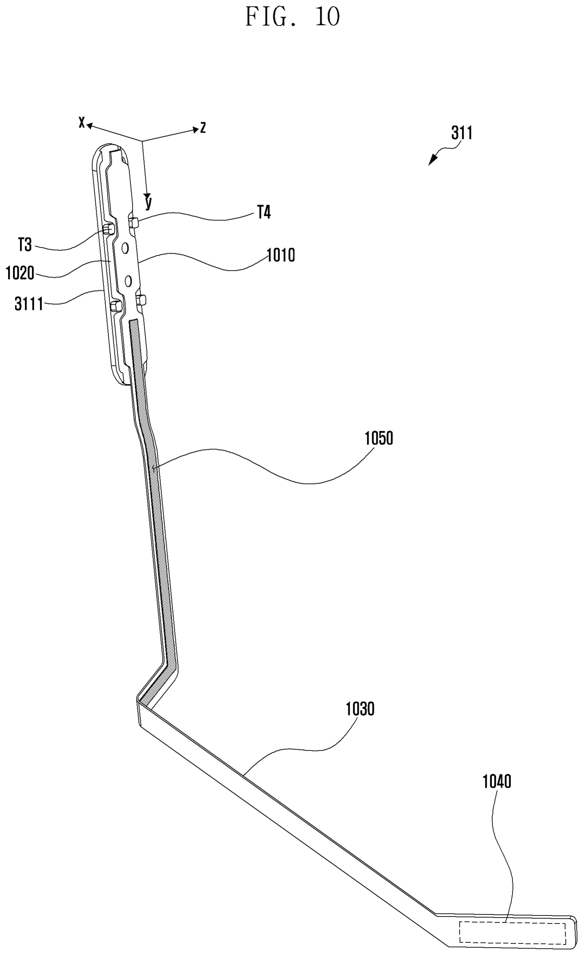

According to an embodiment, the third key input module 311 may include a third key 3111 positioned on the sixth side wall 206 and a third key signal generator (e.g., the third key signal generator 1010 of FIG. 10) configured to generate a key signal in response to pressing or touching of the third key 3111.

According to various embodiments, although not separately illustrated, the positions or number of key input modules are not limited to the illustrated example and may vary.

According to an embodiment, the connection terminal 312 may include a connector (or interface terminal) (not separately illustrated) positioned inside the slidable electronic device 2 to correspond to a connector hole provided (or formed) in the slidable housing 20. In the illustrated example, the connector hole 312 may be provided in the first side wall 201. The positions or numbers of connectors and connector holes corresponding to the connectors are not limited to the illustrated example and may vary. The slidable electronic device 2 may transmit/receive power and/or data to/from an external electronic device electrically connected to the connector. The connector may include, for example, a USB connector or an HDMI connector.

FIG. 4 is an exploded perspective view of a slidable electronic device 2 and a cross-sectional view of the display assembly 26 according to an embodiment of the disclosure. FIG. 5 is an exploded perspective view of the slidable electronic device 2 according to an embodiment of the disclosure. It should be understood that all combinations of the features and/or embodiments disclosed in connection with FIGS. 4 and 5 are contemplated and included in the disclosure. That is, all of the combinations of features described below with reference to FIGS. 4 and 5 are to be considered as being included in the disclosure as specific examples.

Referring to FIGS. 4 and 5, the slidable electronic device 2 may include a first housing 21, a second housing 22, a third frame 23, a display assembly 26, a first guide rail 41, a second guide rail 42, a sliding drive device 43, a first printed circuit board 44, a second printed circuit board 45, a battery 46, a first camera module 304, a second camera module 305, a third camera module 306, a support member 47, and/or a first flexible printed circuit board (FPCB) 48.

According to an embodiment, the first housing 21 may include a first frame 211 and a first cover 212. The first frame 211 may include a first support portion 2111 and a first side portion 2112. The first side portion 2112 may include a first side wall 201, a second side wall 202, and/or a third side wall 203.

According to an embodiment, the second housing 22 may include a second frame 221, a second cover 222, and/or a third cover 223. The second frame 221 may include a second support portion 2211 and a second side 2212. The second side portion 2212 may include a fourth side wall 204, a fifth side wall 205, and/or a sixth side wall 206.

According to an embodiment, the second housing 22 may have a space 220 provided by the combination of the second support portion 2211 and the second side member 2212 of the second frame 221. At least a portion of the first housing 21 may be inserted into the space 220 of the second housing 22.

According to an embodiment, the third frame 23 may be located in the space 220 of the second housing 22 and coupled with the second frame 221. For example, one side portion of the third frame 23 may be connected to the fifth side wall 2055 of the second housing 22, and the other side portion of the third frame 23 may be connected to the sixth side wall 206 of the second housing 22. The third frame 23 may be operatively connected to the first housing 21 to be slidable relative to the first housing 21.

According to an embodiment, the first region ⓐ of the flexible display module 24 may be disposed on or coupled to the first support portion 2111 of the first frame 211. The first region ⓐ may be disposed on the first support portion 2111 using, for example, a heat-reactive adhesive material (or heat-reactive bonding material), a photo-reactive adhesive material (or photo-reactive bonding material), a general adhesive material (or general bonding material), double-sided tape, or an organic adhesive material (or organic bonding material).

According to various embodiments, a first region ⓐ of the flexible display module 24 may be disposed in the first frame 211 in a manner of being inserted in a second direction ② by a sliding method.

According to an embodiment, since the first region ⓐ of the flexible display module 24 is disposed on the first frame 211, when the second housing 22 is slid out, the second region ⓑ of the flexible display module 24 may be withdrawn from the space between the first support portion 2111 of the first frame 211 and the third frame 23 to the outside (e.g., a location visible from the outside of the slidable electronic device 2).

According to an embodiment, when viewed from above on the front surface of the slidable electronic device 2, the region where the first support portion 2111 of the first frame 211 and the third frame 23 overlap may decrease when the second housing 22 is slid out, and may increase when the second housing 22 is slid in.

According to an embodiment, the third frame 23 may include a first support surface 23A and a second support surface 23B that support the second region ⓑ of the flexible display module 24.

According to an embodiment, the first support surface 23A of the third frame 23 may include a substantially planar region. When viewed from above the front surface of the slidable electronic device 2, the region where the first support surface 23A faces the first support portion 2111 of the first housing 21 may decrease when the second housing 22 is slid out, and may increase when the second housing 22 is slid in. In the closed state (see FIG. 2) or the open state (see FIG. 3) of the slidable electronic device 2, or in the sliding of the second housing 22 relative to the first housing 21, at least a portion of the first support surface 23A that faces and overlaps the first support portion 2111 may support the first support portion 2111 of the first housing 21. In the open state of the slidable electronic device 2 or in the sliding of the second housing 22 relative to the first housing 21, the first support surface 23A may support a portion of the second region ⓑ of the flexible display module 24 that provides the screen. When the second housing 22 is slid out, the area of the first support surface 23A, which is not covered by the first support portion 2111 of the first housing 21 and supports the second region ⓑ of the flexible display module 24, may increase.

According to an embodiment, the second support surface 23B of the third frame 23 may include a curved region (or curved support region). The second support surface 23B may be positioned corresponding to the fourth side wall 204 of the first housing 21. The second support surface 23B may support of the bending portion B of the second region ⓑ of the flexible display module 24. The bending portion B of the flexible display module 24 may be a portion of the second region ⓑ that is disposed and maintained in a bent form so that the second region ⓑ changes direction and moves when the second housing 22 slides relative to the first housing 21. During the slide-out of the second housing 22, due to the relative position between the first housing 21 coupled with the first region ⓐ and the second housing 22 corresponding to the second region ⓑ, at least a portion of the second region ⓑ may be pulled out from the inside to the outside of the slidable electronic device 2 through the curved space between the fourth side wall 204 and the second support surface 23B. During the slide-in of the second housing 22, due to the relative position between the first housing 21 coupled with the first region ⓐ and the second housing 22 corresponding to the second region ⓑ, at least a portion of the second region ⓑ may be slid into the inside of the slidable electronic device 2 through the curved space between the fourth side wall 204 and the second support surface 23B.

According to various embodiments, a rotation member (not illustrated separately) such as a roller or a pulley may be provided in place of the portion providing the second support surface 23B of the third frame 23. For example, one end and the other end of the rotation shaft associated with the rotation member may be rotatably coupled to either the second frame 221 or the third frame 23. In various embodiments, the rotation member may be interpreted as a curved member, a curved support member, or a curved support structure implemented to be rotatable based on friction with the display support structure 2420 (e.g., a multi-bar structure).

According to an embodiment, the display assembly 26 may include a flexible display module 24 and a display support structure 25.

According to an embodiment, the flexible display module 24 may include a transparent cover 241, an optically transparent adhesive material (or bonding material) 242, a flexible display 243, and/or a support sheet 244. The transparent cover 241 serves to protect the flexible display 243 and may include, for example, a flexible film or a flexible plate such as a plastic film (e.g., a polyimide film) or ultra-thin glass (UTG). The flexible display 243 may include a plurality of pixels implemented with light-emitting elements such as organic light-emitting diodes (OLEDs) or micro LEDs. The flexible display 243 may be bonded to the transparent cover 241 via the optically transparent adhesive material 242 (e.g., optical clear adhesive (OCA), optical clear resin (OCR), or super-view resin (SVR)). The support sheet 244 may be disposed or bonded to the rear surface of the flexible display 243 via an adhesive material (or bonding material) (not separately illustrated). The rear surface of the flexible display 243 may be a surface positioned on the opposite side of a surface from which light is emitted from the display panel of the flexible display 243 including the plurality of pixels.

According to an embodiment, the support sheet (or support plate or support layer) 244 may secure or enhance the durability of the flexible display module 24. The support sheet 244 may reduce the influence of load or stress that may occur when the second housing 22 slides relative to the first housing 21 on the flexible display module 24. The support sheet 244 may reduce or prevent the flexible display module 24 from being damaged by force transmitted when the second housing 22 slides relative to the first housing 21. The support sheet 244 may include a metal material such as stainless steel, or an engineering plastic.

According to an embodiment, the support sheet 244 may include a lattice structure (not separately illustrated) included in the second region ⓑ of the flexible display module 24. The lattice structure may include, for example, a plurality of openings or slits. The lattice structure may refer to a pattern structure in which multiple openings are regularly arranged. The lattice structure including multiple openings may be referred to by another term, such as "opening pattern," "hole pattern," or "lattice pattern." The multiple openings may be provided periodically, may have substantially the same shape, and may be repeatedly arranged at regular intervals. The lattice structure may contribute to the flexibility of the second region ⓑ, and the second region ⓑ may be more flexible than the first region ⓐ due to the lattice structure. In various embodiments, the support sheet 244 may include a recess pattern (not separately illustrated) including multiple recesses in place of the lattice structure. The recess pattern may refer to a pattern structure in which multiple indented recesses are formed and regularly arranged on the surface of the support sheet 244 facing the display support structure 2420 or on the surface of the support sheet 244 facing the flexible display. In various embodiments, the lattice structure or recess pattern may be expanded to the first region ⓐ of the flexible display module 24.

According to various embodiments, the support sheet 244 may reduce electromagnetic interference (EMI) related to the flexible display module 24.

According to various embodiments, the support sheet 244 may diffuse or dissipate heat emitted from a heat-emitting component (e.g., a display drive circuit such as a display drive integrated circuit (DDI) or a DDI chip).

According to various embodiments, the support sheet 244 may be defined or interpreted as an element separate from the flexible display module 24.

According to an embodiment, the display support structure (or display support member) 25 may be disposed or coupled to the support sheet 244. When the support sheet 244 is omitted, the display support structure 25 may be disposed or coupled to the rear surface of the flexible display 243. The display support structure 25 may be positioned between the second region ⓑ of the flexible display module 24 and the first support surface 23A of the third frame 23 to support the second region ⓑ. When the second housing 22 is slid out, the area of the first support surface 23A of the third housing 23 that is not covered by the first support portion 2111 of the first housing 21 and supports the display support structure 25 may increase. When the second housing 22 is slid in, the area of the first support surface 23A of the third housing 23 that is not covered by the first support portion 2111 of the first housing 21 and supports the display support structure 25 may decrease. The display support structure 25 may support the bending portion B of the flexible display module 24 between the bending portion B of the flexible display module 24 and the second support surface 23B of the third frame 23. During the slide-out or slide-in of the second housing 22, the second housing 22 and the display support structure 25 may move while mutually rubbing against each other.

According to an embodiment, the display support structure 25 may reduce the screen lifting phenomenon caused by the elasticity of the flexible display module 24, thus contributing to providing a smooth screen. The display support structure 25 may support the second region ⓑ of the flexible display module 24 to prevent it from lifting due to the elasticity of the flexible display module 24, thereby contributing to maintaining the second region ⓑ in a smoothly connected form to the first region ⓐ. The display support structure 25 may support the second region ⓑ of the flexible display module 24 to ensure that the second region ⓑ is maintained in a smoothly connected form to the first region ⓐ of the flexible display module 24. The display support structure 25 may contribute to smooth movement of the flexible display module 24 when the second housing 22 is slid relative to the first housing 21. The display support structure 25 may contribute to allowing the second region ⓑ of the flexible display module 24 to move while maintaining the smoothly connected form the first region ⓐ of the flexible display module 24 during the sliding of the second housing 22 relative to the first housing 21.

According to an embodiment, the display support structure 25 may include a multi-bar structure (or multiple bars or a multi-bar assembly). The multi-bar structure may include, for example, multiple support bars extending in a third direction ③ (e.g., the +x-axis direction) orthogonal to the first direction ① (e.g., the slide-out direction) and the direction in which the front surface of the slidable electronic device 2 is oriented. The multi-bar structure may include the form in which the multiple support bars are arranged on the other surface of the display support structure 25, which is located opposite to the one surface facing the second region ⓑ of the flexible display module 24. The multi-bar structure may have flexibility due to portions having a relatively small thickness among the multiple support bars. In various embodiments, the multi-bar structure may be provided without a connecting portion between two neighboring support bars. The multi-bar structure may also be referred to by another term such as "flexible track". The display support structure 25 may contain a metallic material, such as stainless steel, and/or a non-metallic material, such as a polymer.

According to an embodiment, the support sheet 244 corresponding to the second region ⓑ of the flexible display module 24 may include a lattice structure including multiple openings, but, compared to a comparative example in which the support sheet 244 is omitted, a phenomenon in which the multiple support bars of the multi-bar structure protrude through the flexible display module 24 to be visible may be reduced or prevented.

According to various embodiments, the display support structure 25 may serve as the support sheet 244, and the support sheet 244 may be omitted.

According to an embodiment, the display assembly 26 or the flexible display module 24 may include a display driving circuit 2401 (e.g., a **DDI** or a **DDI** chip). The display driving circuit 2401 may be disposed on the flexible display module 24 using a chip-on panel (COP) scheme. The flexible display module 24 may include a third area ⓒ extending from the first area ⓐ. The third region ⓒ may extend from, for example, the first region ⓐ of the flexible display module 24 on the side of the first side wall 201. The third region ⓒ may be bent to be positioned between the support sheet 244 and the first support portion 2111 of the first housing 21 and disposed on the support sheet 244. An adhesive material or bonding material (not separately illustrated) may be disposed between the third region ⓒ and the support sheet 244. When the support sheet 244 is not expanded to the rear surface of the first region ⓐ or the support sheet 244 is omitted, the third region ⓒ may be disposed on the flexible display 243 via an adhesive material or bonding material. The display driving circuit 2401 is disposed in the third region ⓒ. The third region ⓒ may be electrically connected to the first printed circuit board 44 via a second flexible printed circuit board 2402.

According to an embodiment, the second flexible printed circuit board 2402 may pass through an opening (not illustrated) provided (or formed) in the first support portion 2111 of the first housing 21, and may be electrically connected to the first printed circuit board 44 disposed on a surface of the first support portion 2111 that faces the rear surface of the slidable electronic device 2.

According to an embodiment, a touch sensor IC (integrated circuit) 2403 electrically connected to the touch detection circuit included in the flexible display module 24 may be further disposed on the second flexible printed circuit board 2402.

According to various embodiments, the display driving circuit 2401 may be disposed in the flexible display module 24 using a chip-on-film (COF) scheme. For example, the third region ⓒ of the flexible display module 24 may be a flexible film board that connects the flexible display 243 and the flexible printed circuit board electrically connected to the first printed circuit board 44. The display driving circuit 2401 may be disposed on the film board.

According to an embodiment, the first guide rail 41 and the second guide rail 42 may guide the movement of the display support structure 25. The first guide rail 41 may include a first rail part (not illustrated separately) on which one side portion of the display support structure 25 is located and guided. The second guide rail 42 may include a second rail part (not illustrated separately) on which the other side portion of the display support structure 25 is located and guided. The first rail part and the second rail part may each include, for example, a recess that provides a pattern corresponding to the movement path of the display assembly 26 during the sliding of the second housing 22 relative to the first housing 21. The multiple support bars included in the display support structure 25 may include multiple first pins (not illustrated separately) inserted into the first rail part of the first guide rail 41, and multiple second pins (not illustrated separately) inserted into the second rail part of the second guide rail 42.

According to an embodiment, the first guide rail 41 may be positioned between a third frame 23 and a fifth side wall 205 of a second housing 22, and may be disposed on the third frame 23 using a method such as screw fastening. The second guide rail 42 may be positioned between the third frame 23 and the sixth side wall 206 of the second housing 22, and may be disposed on the third frame 23 using a method such as screw fastening. The first guide rail 41 may be coupled to the fifth side wall 205 of the second housing 22 using a method such as screw fastening. The second guide rail 42 may be coupled to the sixth side wall 206 of the second housing 22 using a method such as screw fastening.

According to various embodiments, although not separately illustrated, the fifth side wall 205 of the second housing 22 may be implemented to include the first guide rail, and the first guide rail 41 may be omitted. The sixth side wall 206 of the second housing 22 may be implemented to include the second guide rail, and the second guide rail 42 may be omitted.

According to an embodiment, the sliding driver 43 may provide power (or driving force) for sliding the second housing 22 relative to the first housing 21.

According to an embodiment, the sliding driver 43 may include a motor assembly (not separately illustrated ), a circular gear (or round gear) (not illustrated separately), and/or a linear gear (or linear gear structure) (not separately illustrated). The motor assembly may be disposed on the third frame 23. The motor assembly may provide power for sliding the second housing 22 relative to the first housing 21. The circular gear may include a rotation body in the shape of a circular cylinder or a disk, and multiple gear teeth provided along the circumference of the rotation body. The circular gear may be operatively connected to the motor assembly. The linear gear may be a gear structure in which multiple gear teeth are arranged linearly in the first direction ① (e.g., the slide-out direction). The linear gear may be disposed on the first support plate 2111 of the first housing 21. In various embodiments, the first support portion 2111 may be provided in an integral form that includes the linear gear. The circular gear and the linear gear may be in an engaged state. The circular gear may perform a rotational motion by driving the motor assembly, and the linear gear engaged with the circular gear may perform a linear motion. The circular gear may be referred to as "pinion" or "pinion gear," and the linear gear may be referred to as "rack" or "rack gear." The rotational motion of the circular gear may be converted into the linear motion of the linear gear, so that mutual sliding between the first housing 21 coupled with the linear gear and the second housing 22 coupled with the motor assembly can be provided.

According to an embodiment, when the third frame 23 is slid relative to the first housing 21 due to the power provided by the sliding driver 43, there may be a relative position change between the first guide rail 41 and one side portion of the display support structure 25 located on the first guide rail 41, and a relative position change between the second guide rail 42 and the other side of the display support structure 25 located on the second guide rail 42. Since the flexible display assembly 26 is coupled to the first support portion 2111 of the first housing 21, the relative position change between the first housing 21 and the third frame 23, the relative position change between the first guide rail 41 and one side of the display support structure 25, and the relative position change between the second guide rail 42 and the other side of the display support structure 25 may act as a force that moves the portion of the display support structure 25 on which the second region ⓑ of the flexible display module 24 is disposed.

According to an embodiment, the slidable electronic device 2 may include a sliding structure for stable and smooth sliding between the first housing 21 and the second housing 22. The sliding structure may include, for example, a linear motion (LM) guide (not illustrated separately) interconnecting the first housing 21 and the second housing 22. Through the LM guide, the second housing 22 may be smoothly and seamlessly moved linearly in the first direction ① or the second direction ② relative to the first housing 21. The LM guide may include, for example, a rail, a block, and/or a bearing. The rail may be in the form of a bar extending from a first end to a second end in the direction in which the second housing 22 slides relative to the first housing 21 (e.g., the third direction ③). The rail and the block may be slidably coupled to each other. The bearing may be located between the rail and the block to reduce friction between the rail and the block. The bearing may include, for example, multiple bearing balls and a retainer. In various embodiments, the block may be provided in a form that includes a bearing.

According to an embodiment, the slidable electronic device 2 may include a first LM guide (not illustrated separately) and a second LM guide (not illustrated separately). A first end of the rail of the first LM guide may be coupled to the second side wall 202 of the first housing 21, and the block of the first LM guide may be disposed on (or coupled to) one surface of the third frame 23 corresponding to the first guide rail 41. The first guide rail 41 may include a first recess 411 provided to correspond to the rail of the first LM guide. When the third frame 23 coupled with the block of the first LM guide slides out or slides in relative to the first housing 21 coupled with the rail, the first recess 411 may ensure that the first guide rail and the rail of the first LM do not interfere with each other. A first end of the rail of the second LM guide may be coupled to the third side wall 203 of the first housing 21, and the block of the second LM guide may be disposed on (or coupled to) a surface of the third frame 23 corresponding to the second guide rail 42. The second guide rail 42 may include a second recess 421 provided to correspond to the rail of the second LM guide. When the third frame 23 coupled with the block of the second LM guide slides out or slides in relative to the first housing 21 coupled with the rail, the second recess 421 may ensure that the second guide rail and the rail of the second LM do not interfere with each other. Depending on the relative position between the first housing 21 and the second housing 22, the extent to which the rail of the first LM guide is positioned in the first recess 411 of the first guide rail 41, and the extent to which the rail of the second LM guide is positioned in the second recess 421 of the second guide rail 42, may vary.

According to various embodiments, although not separately illustrated, the rail of the LM guide may be coupled to the first support portion 2111 of the first housing 21.

According to various embodiments, although not separately illustrated, the rail of the LM guide may be coupled to the third frame 23, and the block of the LM guide may be coupled to the first frame 211 of the first housing 21.

Although not illustrated separately, the structure for smooth mutual sliding between the first housing 21 and the second housing 22 may be provided in various other ways. The inner space of the slidable electronic device 2 may increase when the second housing 22 slides out, and may decrease when the second housing 22 slides in. The components accommodated in the inner space of the slidable electronic device 2 may be positioned so as not to interfere with the mutual sliding between the first housing 21 and the second housing 22.

According to an embodiment, the slidable electronic device 2 may include a tensioning device (not separately illustrated) configured to enable smooth and seamless sliding of the second housing 22 (or the third frame 23) relative to the first housing 21. The tension device may enable smooth and seamless sliding by ensuring that the movement or force between the driving elements related to the sliding of the second housing 22 relative to the first housing 21 is smoothly transmitted. The tension device may enable smooth and seamless sliding of the slidable electronic device 2, thereby reducing the stress effect on the driving elements to reduce or prevent the damage to the driving elements.

According to an embodiment, a plurality of electrical components such as the first printed circuit board 44, the first camera module 304, the second camera module 305, and the third camera module 306, and/or one or more members such as the support member 47 (not separately illustrated), may be disposed on or supported by a first frame 211. The first frame 211 may include a first seating portion configured to stably dispose or support the plurality of electrical components and/or the one or more members. The first seating portion may be provided as a combination of surface regions having different heights. The first printed circuit board 44 (e.g., a rigid printed circuit board (RPCB), a flexible printed circuit board (FPCB), or a rigid-flexible printed circuit board (RFPCB)) may be disposed, for example, on the first support portion 2111 between the first support portion 2111 and the first cover 212. Although not separately illustrated, other electrical components and/or members may also be disposed on the first frame 23. The support member 47 may be positioned, for example, between the first support portion 2111 and the first cover 212 and may at least partially cover the first printed circuit board 44 to protect the same.

According to various embodiments, the slidable electronic device 2 may further include an additional battery (not separately illustrated) disposed in the first housing 21.

According to an embodiment, one or more electrical components such as the second printed circuit board 45, and/or one or more members (not separately illustrated), may be disposed on or supported by a second frame 221. The second frame 211 may include a second seating portion configured to stably dispose or support the one or more electrical components and/or the one or more members. The second seating portion may be provided as a combination of surface regions having different heights. The second printed circuit board 45 (e.g., an RPCB, an FPCB, or an RFPCB) may be disposed on or coupled to, for example, the second support portion 2211 between the second support portion 2211 and the second cover 222.

According to an embodiment, one or more electrical components such as the battery 46, and/or one or more members (not separately illustrated), may be disposed on or supported by the third frame 23. The third frame 23 may include a third seating portion configured to stably dispose or support the one or more electrical components and/or the one or more members. The third seating portion may be provided as a combination of surface regions having different heights. The battery 46 may be disposed on, for example, the third frame 23 between the third frame 23 and the second support portion 2211.

According to an embodiment, the first flexible printed circuit board 48 may electrically interconnect a first electrical component located in the first housing 21 (e.g., the first printed circuit board 44) and a second electrical component located in the second housing 22 (or the third frame 23). The first flexible printed circuit board 48 may be disposed in a bent state depending on the relative position between the first housing 21 and the second housing 22.

According to an embodiment, the first flexible printed circuit board 48 may be utilized as a transmission line in an antenna device (or antenna system) (not illustrated separately) of the slidable electronic device 2. The first flexible printed circuit board 48 may transmit an electromagnetic signal (or wireless signal, RF signal, or radiated current).

According to an embodiment, the first flexible printed circuit board 48 may be a flexible RF cable (FRC) or a flexible PCB type RF cable.

The slidable electronic device 2 may further include various components depending on the form in which it is provided. Although all of these components cannot be listed since the components are modified diversely depending on the convergence trend of slidable electronic devices 2, components equivalent to the above-mentioned components may be further included in the slidable electronic device 2. In various embodiments, certain components may be excluded from the above-described components or replaced with other components depending on the provided form of the electronic device. It is to be understood that all combinations of the features and/or embodiments mentioned above are conceived and included in the disclosure. That is, all of the combinations of the above-described features are to be considered as being included in the disclosure as specific examples.

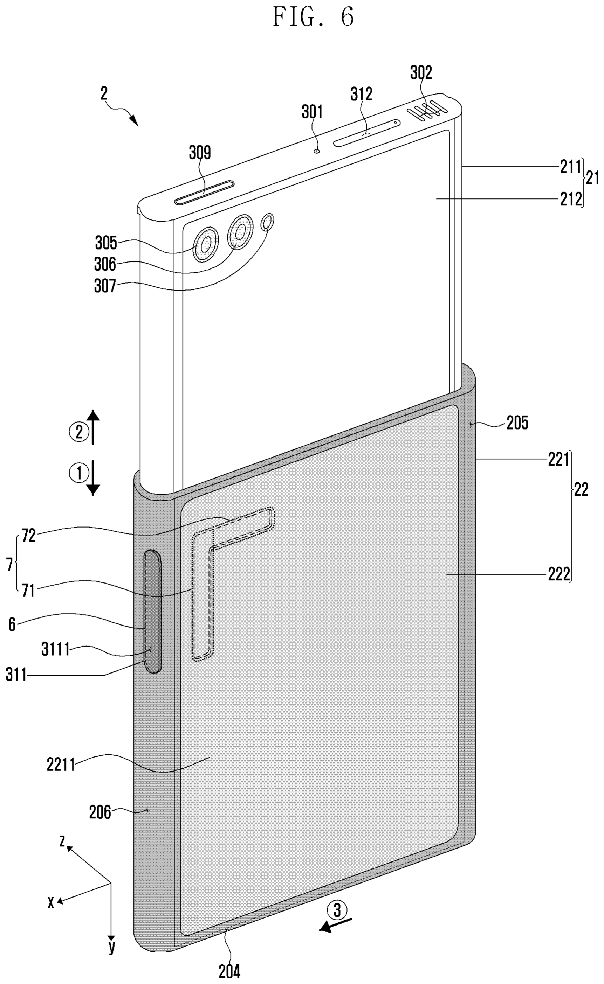

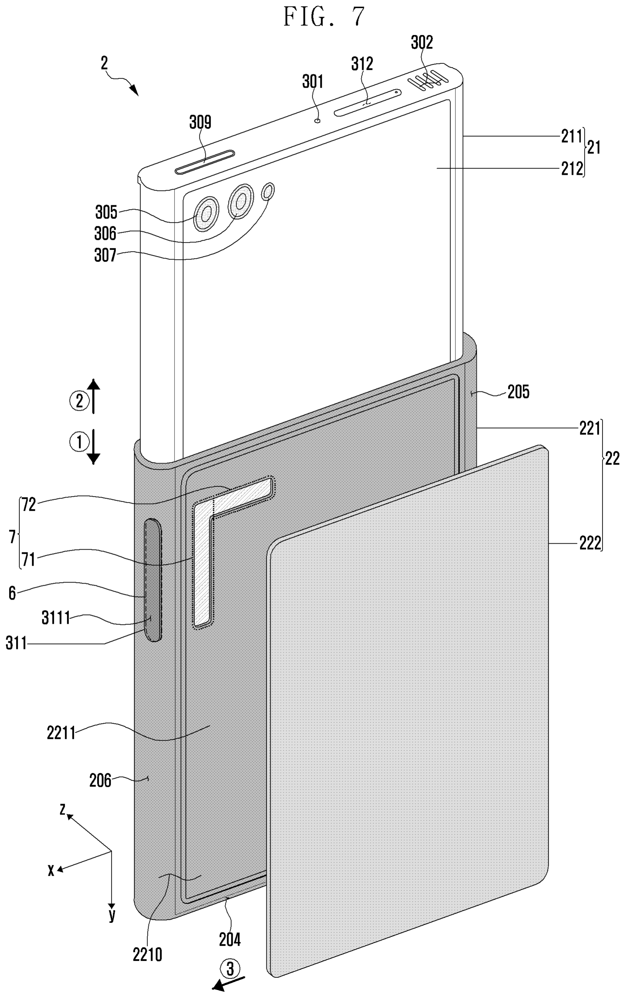

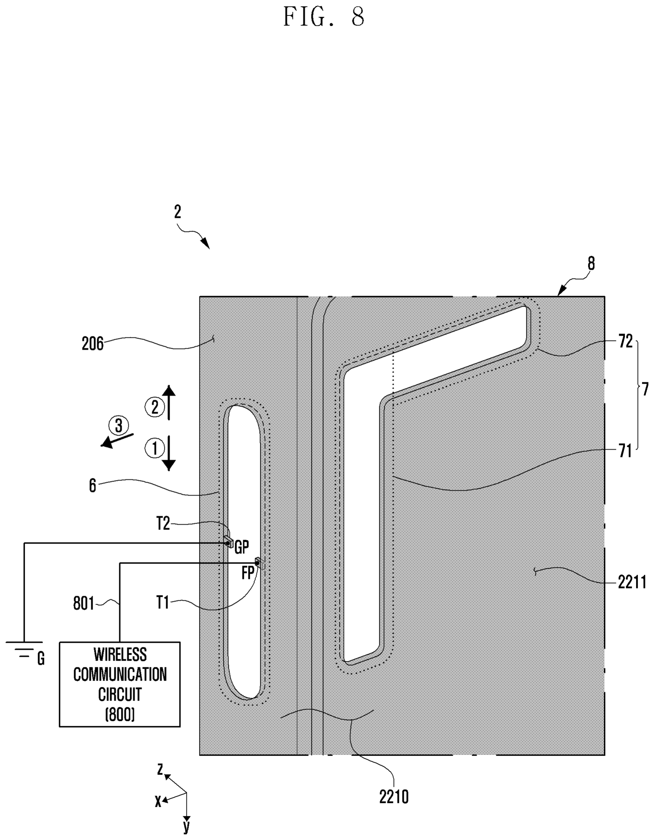

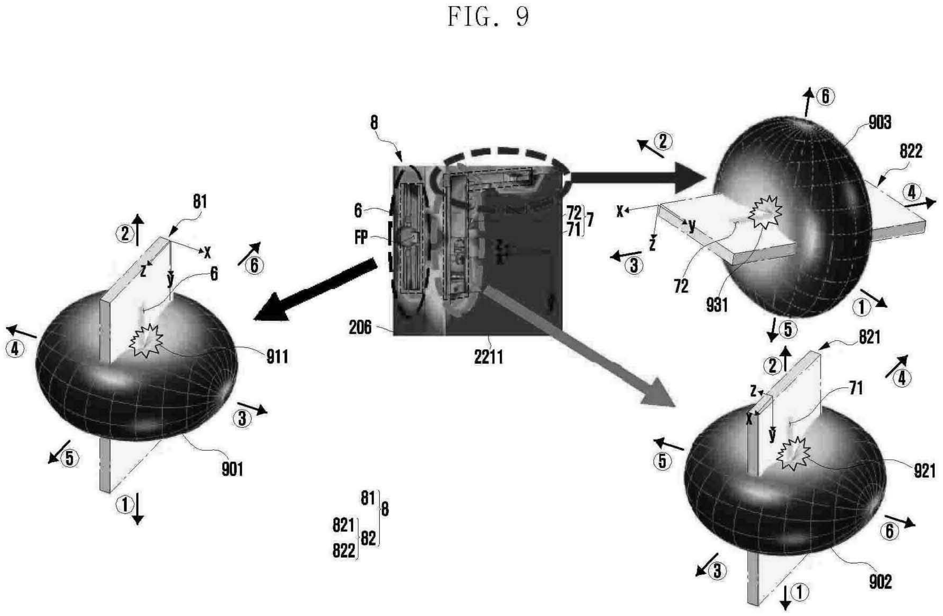

FIG. 6 is a perspective view of a slidable electronic device 2 in an open state, according to an embodiment of the disclosure. FIG. 7 is a perspective view of the slidable electronic device 2 in an open state with a second cover 222 separated, according to an embodiment of the disclosure. FIG. 8 is a view illustrating a portion of the slidable electronic device 2, according to an embodiment of the disclosure. FIG. 9 is a view illustrating a heat map representing current distribution in a conductive region 8 and beam patterns of the conductive region 8, according to an embodiment of the disclosure. It is to be understood that the disclosure contemplates and includes all combinations of features and/or embodiments disclosed with reference to FIGS. 6, 7, 8, and 9. That is, all of the combinations of features described below with reference to FIGS. 6, 7, 8, and 9 are to be considered as being included in the disclosure as specific examples.

Referring to FIGS. 6, 7, and 8, the slidable electronic device 2 may include a first housing 21 including a first frame 211 and a first cover 212, a second housing 22 including a second frame 221 and a second cover 222, a microphone (not separately illustrated) corresponding to a microphone hole 301, a first speaker (not separately illustrated) corresponding to a first speaker hole 302, a second camera module 305, a third camera module 306, a light-emitting module 307, a first key input module 309, a third key input module 311, a connection terminal 312, and/or a wireless communication circuit 800.

According to an embodiment, the slidable electronic device 2 may include a ground structure (e.g., not illustrated separately). For example, the ground structure may include a first ground region (not separately illustrated) included in the first printed circuit board 44 (see FIG. 5). For example, the ground structure may include a second ground region (not separately illustrated) included in the second printed circuit board 45 (see FIG. 5). For example, the ground structure may include a first conductor (or first conductive structure or first metal) (not illustrated separately) included in the first housing 21. For example, the ground structure may include a second conductor (or second conductive structure or second metal) 2210 included in the second housing 22. For example, the ground structure may include a third conductor (or third conductive structure or third metal) (not separately illustrated) included in the display assembly 26 (see FIG. 4). For example, the first ground region, the second ground region, the first conductor, and/or the second conductor may be electrically connected. For example, the ground structure may further include at least one other conductor (not separately illustrated) that is electrically connected to the first ground region, the second ground region, the first conductor, and/or the second conductor. The ground structure may be provided (or formed) by various other combinations.

According to an embodiment, the ground structure of the slidable electronic device 2 may reduce or prevent electromagnetic interference (EMI) to electrical components included in the slidable electronic device 2. The ground structure of the slidable electronic device 2 may reduce or prevent the electromagnetic influence of noise from the outside of the slidable electronic device 2 on the electrical components included in the slidable electronic device 2. The ground structure of the slidable electronic device 2 may reduce or prevent electromagnetic interference between the electric components included in the slidable electronic device 2.

According to an embodiment, the slidable electronic device 2 may include a first conductive region (not illustrated separately) and a second conductive region (not illustrated separately). The first conductive region and the second conductive region may be electrically connected to each other, or may be electrically and physically connected to each other. According to various embodiments of the disclosure, when the first conductive region is configured to substantially radiate electromagnetic waves, the first conductive region of the combination of the first conductive region and the second conductive region may be defined or interpreted as a radiating portion (or antenna radiating portion, radiator, or antenna radiator), and the second conductive region of the combination of the first conductive region and the second conductive region may be defined or interpreted as a ground structure of the slidable electronic device 2 that is distinguished from the radiator. According to various embodiments of the disclosure, when the first conductive region is configured to substantially radiate electromagnetic waves, the combination of the first conductive region and the second conductive region may be defined or interpreted as a ground structure of the slidable electronic device 2, and the first conductive region may be defined or interpreted as a radiator implemented through a portion of the ground structure of the slidable electronic device 2. According to various embodiments of the disclosure, when the first conductive region is configured to substantially radiate electromagnetic waves, the second conductive region may operate as an antenna ground that electromagnetically affects the first conductive region (e.g., an antenna radiator). The antenna ground may contribute to securing antenna radiating performance (also referred to as radio wave transmission/reception performance or communication performance) and/or coverage relative to the antenna radiator. The antenna ground may reduce electromagnetic interference (EMI) or signal loss relative to the radiator.

According to an embodiment, a portion of the ground structure of the slidable electronic device 2 may operate as a radiator (or antenna radiating portion, radiator, or antenna radiator). A portion of the ground structure of the slidable electronic device 2 may be electrically connected to a wireless communication circuit 800 (e.g., the wireless communication module 192 of FIG. 1) disposed on the first printed circuit board 44 (see FIG. 5) or the second printed circuit board 45 (see FIG. 5). Another portion of the ground structure of the slidable electronic device 2 may operate as a radiator (e.g., a resonator) by receiving (or being fed with) an electromagnetic signal (or wireless signal, radio frequency (RF) signal, or radiated current) from the wireless communication circuit 800. Still another portion of the ground structure of the slidable electronic device 2 may be provided as an antenna ground that exerts an electromagnetic influence on at least one antenna radiator.

According to an embodiment, the wireless communication circuit 800 may process a transmission signal or a reception signal in at least one selected or predetermined frequency band via at least one radiating portion (or antenna radiating portion, radiator, or antenna radiator). The selected or predetermined frequency band may include, for example, a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The selected or predetermined frequency band may include various other frequency bands.

According to an embodiment, the second conductor 2210 may be included in the second frame 221 of a second housing 22. The second conductor 2210 may provide (or form) at least a portion of the second frame 221. For example, a portion of the second conductor 2210 may be included in the second support portion 2211 of the second frame 221, and the remaining portion of the second conductor 2210 may be included in the fourth side wall 204, the fifth side wall 205, and/or the sixth side wall 206. The shape of the second conductor 2210 is not limited to the illustrated example and may vary.

According to various embodiments, the second frame 221 of the second housing 22 may be provided (or formed) as a combination of the second conductor 2210 and a non-conductor (not separately illustrated) coupled to the second conductor 2210. For example, a surface of the second support portion 2211, the fourth side wall 204, the fifth side wall 205, and/or the sixth side wall 206 of the second frame 221 may be provided (or formed) by a combination of the second conductor 2210 and the non-conductor.

According to an embodiment, the second conductor 2210 of the second frame 221 may include a first opening 6 and/or a second opening 7.

According to an embodiment, the first opening 6 may be provided (or formed) in a portion of the second conductor 2210 that is included in the sixth side wall 206. For example, the first opening 6 may be referred to as a "side slot."

According to an embodiment, the first opening 6 may be a key hole corresponding to a third key input module 311. The third key input module 311 may include a third key 3111 positioned in the first opening 6. For example, the first opening 6 may be provided in a shape into which the third key 3111 can be fitted.

According to an embodiment, when viewed toward the sixth side wall 206 (e.g., viewed in the -x axis direction), the second conductor 2210 may surround the entire edge of the first opening 6.

According to an embodiment, the second opening 7 may be provided (or formed) in a portion of the second conductor 2210 that is included in the second support portion 2211. The second opening 7 may be formed in the second support portion 2211 corresponding to the rear surface of the slidable electronic device 2. The second opening 7 may be referred to as a "back slot."

According to an embodiment, when viewed from above the second cover 222 (e.g., viewed in the +z-axis direction), the second conductor 2210 may surround the entire edge of the second opening 7.

According to an embodiment, when viewed from above the second cover 222, the second opening 7 may be covered by the second cover 222.

According to various embodiments, the frame 221 may further include a non-conductive portion (e.g., at least a portion of a non-conductor) (not separately illustrated) that is at least partially disposed in the second opening 7.

According to an embodiment, the wireless communication circuit 800 may provide (or feed) an electromagnetic signal (or wireless signal, RF signal, or radiated current) to the second conductor 2210. The second conductor 2210 may include a feeding point FP electrically connected to the wireless communication circuit 800. The wireless communication circuit 800 may be electrically connected to the feeding point FP through a transmission line 801. The transmission line 801 may be an electrical path through which the electromagnetic signal is transmitted.

According to an embodiment, when the wireless communication circuit 800 provides (or feeds) an electromagnetic signal (or wireless signal, RF signal, or radiated current) to the feeding point FP of the second conductor 2210, a conductive region 8 including a first opening (or first opening pattern or first hole pattern) 6 and a second opening (or second opening pattern or second hole pattern) 7 of the second conductor 2210 may operate as a radiating portion (or antenna radiating portion, radiator, or antenna radiator) that radiates electromagnetic waves. When power fed to the feeding point FP, the conductive region 8 may be defined or interpreted as a portion that substantially provides (or forms) an electromagnetic field (or radiating field) capable of transmitting and/or receiving electromagnetic waves in a selected or predetermined frequency band of the second conductor 2210. When power is fed to the feeding point FP, due to the path along which the electromagnetic signal flows and/or the distribution of the electromagnetic signal in the conductive region 8, an electromagnetic field (or radiating field) for transmitting and/or receiving a signal in a selected or predetermined frequency band may be provided (or generated) by the conductive region 8.

According to an embodiment, the slidable electronic device 2 may include a feeding portion (or feeding structure) that electrically connects the conductive region 8 and the wireless communication circuit 800. The feeding portion may be provided (or formed) as a combination of a plurality of conductive paths or conductive structures that connect the feeding point FP and the wireless communication circuit 800 so as to provide an electromagnetic signal (or wireless signal, RF signal, or radiated current) to the conductive region 8. The transmission line 801 may be defined or interpreted as a portion of the feeding portion (or feeding structure).

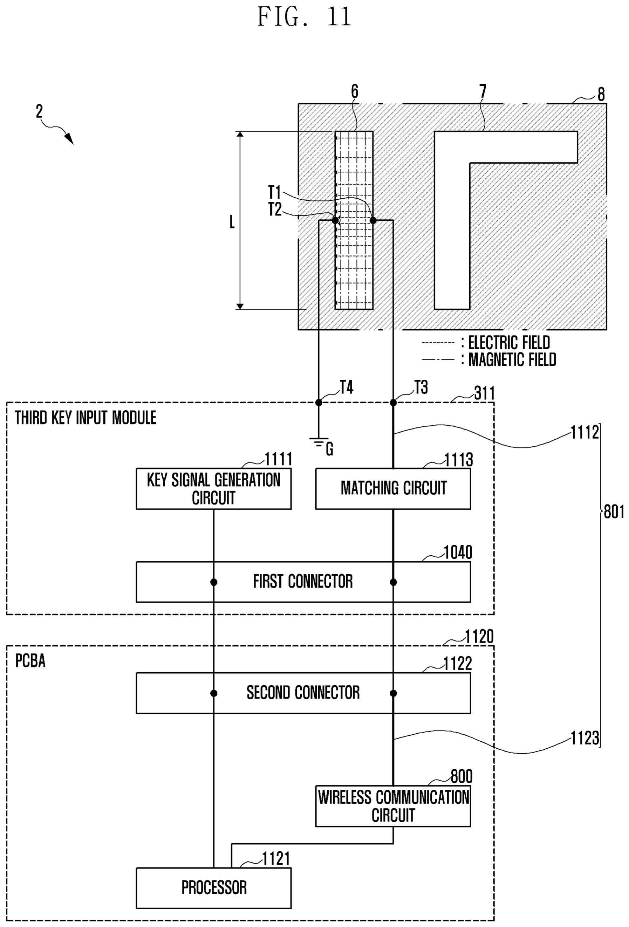

According to an embodiment, a feeding portion (or feeding structure) that electrically connects the conductive region 8 and the wireless communication circuit 800 may include a matching circuit (e.g., the matching circuit 1113 of FIG. 11). For example, the matching circuit may be disposed on or electrically connected to the transmission line 801. The matching circuit may include an electrical component having, for example, an inductance, a capacitance, or a conductance. For example, the matching circuit may include various elements such as lumped elements or passive elements.

According to an embodiment, the matching circuit (e.g., the matching circuit 1113 of FIG. 11) included in the feeding portion (or feeding structure) that electrically connects the conductive region 8 and the wireless communication circuit 800 may substantially match the impedance of the transmission line 801 and the impedance of the conductive region 8. Impedance matching may reduce reflection at the interface between the transmission line 801 and the conductive region 8, thereby improving antenna radiating performance.

According to various embodiments, a matching circuit (e.g., the matching circuit 1113 of FIG. 11) included in the feeding portion (or feeding structure) that electrically connects the conductive region 8 and the wireless communication circuit 800 may shift the resonant frequency of the conductive region 8 to a predetermined frequency, or by a predetermined amount.

According to various embodiments, a matching circuit (e.g., the matching circuit 1113 of FIG. 11) included in the feeding portion (or feeding structure) that electrically connects the conductive region 8 and the wireless communication circuit 800 may be configured to reduce the difference in antenna radiating performance between the closed state and the open state of the slidable electronic device 2, caused by a change in relative position between the first housing 21 (and/or at least one component positioned in the first housing 21) and the second housing 22 (and/or a component positioned in the second housing 22) during the transition between the closed state and the open state.

According to an embodiment, the conductive region 8 may include a first conductive region 81 (see FIG. 9) including the first opening 6, and a second conductive region 82 (see FIG. 9) including the second opening 7.

According to an embodiment, when the wireless communication circuit 800 provides an electromagnetic signal (or wireless signal, RF signal, or radiated current) to the feeding point FP, the first conductive region 81 including the first opening 6 may form (or provide) a first electromagnetic field (or first radiating field), and the second conductive region 82 including the second opening 7 may form (or provide) a second electromagnetic field (or second radiating field).

According to an embodiment, when power is fed to the feeding point FP, the first conductive region 81 may operate as a first slot radiator (or first slot radiating portion or first slot radiating region) that resonates the first opening 6, and the second conductive region 82 may operate as a second slot radiator (or second slot radiating portion or second slot radiating region) that resonates the second opening 7. When power is fed to the feeding point FP, energy in a selected or predetermined frequency band may be substantially concentrated in the first opening 6 of the first conductive region 81 and the second opening 7 of the second conductive region 82. The first opening 6 may be defined or interpreted as a "first slot," and the second opening 7 may be defined or interpreted as a "second slot."

According to an embodiment, the position of the feeding point FP may be implemented such that, when feeding is performed, the electromagnetic signal may smoothly flow through the first opening 6 of the first conductive region 81 and the second opening 7 of the second conductive region 82. For example, since the first opening 6 is implemented as a key hole corresponding to the third key 3111 of the third key input module 311, the position of the first opening 6 may be restricted. Therefore, the second opening 7 may be designed to be covered by the second cover 222 and positioned as close as possible to the first opening 6, so as to facilitate the design of the position of the feeding point FP.

According to an embodiment, the wireless communication circuit 800 may provide an electromagnetic signal (or wireless signal, RF signal, or radiated current) to the conductive region 8 through the third key input module 311.

According to an embodiment, the third key input module 311 may include a portion of the feeding portion (or feeding structure) that electrically connects the conductive region 8 and the wireless communication circuit 800.

According to an embodiment, the transmission line 801 included in the feeding portion that electrically connects the conductive region 8 and the wireless communication circuit 800 may include a first line portion and a second line portion. The first line portion (e.g., the first line portion 1112 of FIG. 11) may be included in the third key input module 311. The second line portion (e.g., the second line portion 1123 of FIG. 11) may electrically connect the first line portion and the wireless communication circuit 800. The third key input module 311 may include, for example, a conductive path (e.g., the conductive path 1050 of FIG. 10) that transmits an electromagnetic signal from the wireless communication circuit 800 to the conductive region 8. The conductive path may be included in the first line portion of the transmission line 801.

According to an embodiment, the feeding portion (or feeding structure) that electrically connects the conductive region 8 and the wireless communication circuit 800 may include a matching circuit (e.g., the matching circuit 1113 of FIG. 11) included in the third key input module 311. The matching circuit may be disposed, for example, in the first line portion (e.g., the first line portion 1112 of FIG. 11) of the transmission line 801 included in the third key input module 311, or may be electrically connected to the first line portion.

According to an embodiment, the conductive region 8 may include a ground point GP that is electrically connected to a ground region (e.g., the ground region G of FIG. 11) of the third key input module 311. The feeding point FP and the ground point GP of the conductive region 8 may be disposed at the edge of the first opening 6. The feeding point FP and the ground point GP may be positioned on opposite sides of the first opening 6. When an electromagnetic signal (or wireless signal, RF signal, or radiated current) is provided (or fed) to the feeding point FP, an electromagnetic field (electric field and magnetic field) that resonates the first opening 6 (or radiates an electromagnetic wave through the first opening 6) may be provided (or formed) due to a potential difference between the feeding point FP and the ground point GP.

According to an embodiment, the first slot radiator (or first slot radiating portion or first slot radiating region) that resonates the first opening 6 may be configured to substantially operate as a half-wavelength antenna. For example, the length (e.g., the width in the y-axis direction) of the first opening 6 may be provided (or formed) to be substantially half of the wavelength (λ/2) of the electromagnetic wave. The feeding point FP and the ground point GP may be positioned substantially at the center of the length of the first opening 6 extending in the y-axis direction, so that the intensity of the electric field (or the radiating efficiency of the electromagnetic wave) may be substantially maximized at the center of the first opening 6.

According to various embodiments, the positions of the feeding point FP or the ground point GP are not limited to the illustrated examples and may vary. For example, the feeding point FP may be positioned at the edge of the second opening 7 to correspond to a region between the first opening 6 and the second opening 7. For example, the ground point GP may be positioned at the edge of the second opening 7, and the feeding point FP and the ground point GP may be positioned on opposite sides of the second opening 7.

According to an embodiment, the conductive region 8 may include a first terminal T1 including the feeding point FP and a second terminal T2 including the ground point GP. The first terminal T1 may be in physical contact with a third terminal (e.g., the third terminal T3 of FIG. 10) of the third key input module 311. The third key input module 311 may include a conductive path (e.g., the conductive path 1050 of FIG. 10) to transmit an electromagnetic signal from the wireless communication circuit 800 to the conductive region 8, and the third terminal may be electrically connected to the conductive path. The second terminal T2 may be in physical contact with a fourth terminal (e.g., the fourth terminal T4 of FIG. 10) of the third key input module 311. The fourth terminal may be electrically connected to a ground region (e.g., the ground region G of FIG. 11) included in the third key input module 311, or may be implemented as a portion of the ground region. The first terminal T1 may be provided (or formed), for example, in the form of a protrusion positioned at the inner edge of the first opening 6. The second terminal T2 may also be provided (or formed), for example, in the form of a protrusion positioned at the inner edge of the first opening 6.

According to various embodiments, the second terminal T2 including the ground point GP and a wire (or line) electrically connecting the second terminal T2 to a ground region (e.g., the ground region G of FIG. 11) may be omitted. For example, the conductive region 8 may be interpreted as being grounded as a portion of a ground structure (not separately illustrated) of the slidable electronic device 2, which is implemented as a radiating portion and includes a combination of one or more grounds.

According to an embodiment, the feeding point FP may be positioned between the first opening 6 and the second opening 7 in the conductive region 8.

According to an embodiment, the feeding point FP may be positioned between the first opening 6 and the second opening 7 in the conductive region 8, and be closer to the first opening 6 than to the second opening 7.

According to an embodiment, the first opening 6 may extend substantially linearly in a first direction ①.

According to an embodiment, when power is fed to the feeding point FP, a first conductive region 81 including the first opening 6 in the conductive region 8 may provide (or form) an omni-directional first beam pattern 901 (see FIG. 9). To aid in understanding that the first conductive region 81 forms an omni-directional first beam pattern 901 when power is fed to the feeding point FP, the first conductive region 81 illustrated in FIG. 9 is merely represented in the form of a rectangular plate including a slot corresponding to the first opening 6, but such a form is not intended to limit the scope of the disclosure. An electromagnetic wave radiated from the first conductive region 81 may be a first linearly polarized wave having a first polarization direction (e.g., a direction in which the electric field vibrates, a direction of electric field polarity, or a direction of the electric field). This direction is parallel to a fifth direction ⑤ (e.g., the +z-axis direction) (or sixth direction ⑥ (e.g., the -z-axis direction)), which is substantially perpendicular to a first direction ① (e.g., the +y-axis direction) (or second direction ② (e.g., the -y-axis direction)) and a third direction ③ (e.g., the +x-axis direction) (or fourth direction ④ (e.g., the -x-axis direction)). The first beam pattern 901 provided (or formed) from the first conductive region 81 may include a first radiating pattern (e.g., a first radiating pattern in the electric field plane), corresponding to the first polarization direction (e.g., the x-z plane as the electric field plane (E-plane)), and a second radiating pattern (e.g., a second radiating pattern in the magnetic field plane), corresponding to a direction perpendicular to the first polarization direction (e.g., the x-y plane as the magnetic field plane (H-plane)). The second radiating pattern corresponding to the direction perpendicular to the first polarization direction may include a null region 911, in which gain is relatively reduced in the direction perpendicular to the first polarization direction. The null region 911 may be a non-effective region in which it is substantially difficult to transmit or receive electromagnetic waves, and may correspond to, for example, a portion where the electric field intensity is substantially zero in an electric field distribution.

According to an embodiment, the second conductive region 82 including the second opening 7 may radiate a beam pattern capable of securing coverage by complementing the null region 911 of the first beam pattern 901 radiated through the first conductive region 81 including the first opening 6. The second conductive region 82 including the second opening 7 may improve antenna efficiency and isotropy by boosting the radiating emitted from the first conductive region 81 including the first opening 6.

According to an embodiment, the second opening 7 may include a first portion 71 and a second portion 72 extending in different directions. The second opening 7 may be implemented as an integrated or single opening (e.g., a single continuous opening) including the first portion 71 and the second portion 72.

According to an embodiment, when power is fed to the feeding point FP, the first portion 71 of the second opening 7 may be supplied with the electromagnetic signal (or wireless signal, RF signal, or radiated current). The electromagnetic signal may flow from the first portion 71 to the second portion 72.

According to an embodiment, the first portion 71 of the second opening 7 may be substantially linearly extended in the first direction ①. For example, the first portion 71 may be substantially parallel to the first opening 6 (e.g., a first slot).

According to an embodiment, when viewed from above the second cover 222, a second portion 721 of the second opening 7 may extend from the first portion 71 in a direction that is not parallel to the first direction ①.

According to an embodiment, when viewed from above the second cover 222, the second portion 72 of the second opening 7 may be substantially perpendicular to the first portion 71 of the second opening 7.

According to an embodiment, the second conductive region 82 of the conductive region 8 may include a first partial conductive region 821 including the first portion 71 of the second opening 7 and a second partial conductive region 822 including the second portion 72 of the second opening 7.

According to an embodiment, when power is fed to the feeding point FP, the first partial conductive region 821 of the second conductive region 82 may provide (or form) an omnidirectional second beam pattern 902. To aid in understanding that the first partial conductive region 821 of the second conductive region 82 forms the omnidirectional second beam pattern 902 when power is fed to the feeding point FP, the first partial conductive region 821 illustrated in FIG. 9 is merely illustrated as a rectangular plate including a slot corresponding to the first portion 71 of the second opening 7, and this form is not intended to limit the scope of the disclosure. An electromagnetic wave radiated from the first partial conductive region 821 may be a second linearly polarized wave having a second polarization direction (e.g., a direction in which the electric field oscillates, the polarity direction of the electric field, or the direction of the electric field), which is substantially parallel to the third direction ③ (or the fourth direction ④, which is perpendicular to the first direction (1) (or the second direction (2)) and the fifth direction ⑤ (or the sixth direction ⑥). The second beam pattern 902 provided (or formed) from the first partial conductive region 821 may include a third radiating pattern (e.g., a third radiating pattern in an electric field plane) corresponding to the second polarization direction (e.g., the x-z plane as the electric field plane), and a fourth radiating region (e.g., a fourth radiating pattern in a magnetic field plane) corresponding to a direction perpendicular to the second polarization direction (e.g., the y-z plane as the magnetic field plane). The fourth radiating pattern corresponding to the direction perpendicular to the second polarization direction may include a null region 921, in which the gain is relatively reduced in the direction perpendicular to the second polarization direction.

According to an embodiment, when power is fed to the feeding point FP, the second partial conductive region 822 of the second conductive region 82 may provide (or form) an omnidirectional third beam pattern 903. To aid in understanding that the second partial conductive region 822 of the second conductive region 82 forms the omnidirectional third beam pattern 903 when power is fed to the feeding point FP, the second partial conductive region 822 illustrated in FIG. 9 is merely illustrated as a rectangular plate including a slot corresponding to the second portion 72 of the second opening 7, and this form is not intended to limit the scope of the disclosure. An electromagnetic wave radiated from the second partial conductive region 822 may be a third linearly polarized wave having a third polarization direction (e.g., a direction in which the electric field oscillates, the polarity direction of the electric field, or the direction of the electric field), which is substantially parallel to the first direction ① (or the second direction ②). The third beam pattern 903 provided from the second partial conductive region 822 may include a fifth radiating pattern (e.g., a fifth radiating pattern in an electric field plane) corresponding to the third polarization direction (e.g., the y-z plane as the electric field plane), and a sixth radiating pattern (e.g., a sixth radiating pattern in a magnetic field plane) corresponding to a direction perpendicular to the third polarization direction (e.g., the x-z plane as the magnetic field plane). The sixth radiating pattern corresponding to the direction perpendicular to the third polarization direction may include a null region 931, in which the gain is relatively reduced in the direction perpendicular to the third polarization direction.

According to an embodiment, when it is difficult for the omnidirectional first beam pattern 901 radiated from the first conductive region 81 to ensure directivity and/or coverage (or communication range) with respect to the first direction ① and the second direction ② due to the null region 911, this may be complemented and/or ensured by the omnidirectional third beam pattern 903 radiated from the second partial conductive region 822 of the second conductive region 82. Similarly, when it is difficult for the omnidirectional second beam pattern 902 radiated from the first partial conductive region 821 of the second conductive region 82 to ensure directivity and/or coverage (or communication range) with respect to the first direction ① and the second direction ② due to the null region 921, this may be complemented and/or ensured by the omnidirectional third beam pattern 903 radiated from the second partial conductive region 822 of the second conductive region 82.

According to an embodiment, when it is difficult for the omnidirectional third beam pattern 903 radiated from the second partial conductive region 822 of the second conductive region 82 to ensure directivity and/or coverage (or communication range) with respect to the third direction ③ and the fourth direction ④ due to the null region 931, this may be complemented and/or ensured by the omnidirectional first beam pattern 901 radiated from the first conductive region 81 and/or the omnidirectional second beam pattern 902 radiated from the first partial conductive region 821 of the second conductive region 82.

According to various embodiments, although not illustrated separately, the second portion 72 of the second opening 7 may form an acute angle with the first portion 71 of the second opening 7 when viewed from above the second cover 222. An omnidirectional beam pattern (not separately illustrated) radiated from the second partial conductive region 822 including the second portion 72 of the second opening 7 may ensure directivity and/or coverage (or communication range) with respect to a direction between the first direction ① and the third direction ③, and a direction between the second direction ② and the fourth direction ④.

According to various embodiments, although not illustrated separately, the second portion 72 of the second opening 7 may form an obtuse angle with the first portion 71 of the second opening 7 when viewed from above the second cover 222. An omnidirectional beam pattern (not separately illustrated) radiated from the second partial conductive region 822 including the second portion 72 of the second opening 7 may ensure directivity and/or coverage (or communication range) with respect to a direction between the first direction ① and the fourth direction ④, and a direction between the second direction ② and the third direction ③.

According to various embodiments, although not illustrated separately, the shapes of the second conductive region 82 and the second opening 7 included in the second conductive region 82, which are configured to boost the radiation of the first conductive region 81 including the first opening 6 to improve antenna efficiency and isotropy, are not limited to the illustrated example and may vary.

According to an embodiment, the wireless communication circuit 800 may transmit and/or receive signals in a frequency band related to ultra-wideband (UWB) through the conductive region 8.

FIG. 10 is a perspective view of the third key input module 311 according to an embodiment of the disclosure. It is to be understood in the disclosure that all the combinations of features and/or embodiments disclosed with reference to FIG. 10 are conceived and included. That is, all of the combinations of features described below with reference to FIG. 10 are to be considered as being included in the disclosure as specific examples.

Referring to FIG. 10, the third key input module 311 may include a third key 3111, a third key signal generator 1010, a support 1020, a third flexible printed circuit board 1030, a first connector 1040, a conductive path 1050, a third terminal T3, and/or a fourth terminal T4.

According to an embodiment, the third key 3111 may be positioned in the first opening 6 of the sixth side wall 206 (see FIG. 8).

According to an embodiment, the third key signal generator 1010 may include a circuit board on which a key signal generation circuit (e.g., the key signal generation circuit 1111 of FIG. 11) is disposed.

According to an embodiment, the key signal generation circuit of the third key signal generator 1010 may include two physically separated terminals (not separately illustrated). When the third key 3111 is pressed, the two terminals may be electrically connected. The processor (e.g., the processor 120 of FIG. 1) may recognize the conduction of the two terminals as a key signal. The combination of the third key 3111 and the two terminals may be defined or interpreted as a "switch."

According to an embodiment, the key signal generation circuit of the third key signal generator 1010 may include a circuit (not separately illustrated) including a pull-up resistor (e.g., a pull-up resistor circuit) or a circuit including a pull-down resistor (e.g., a pull-down resistor circuit) (not separately illustrated). The third key signal generator 1010 may generate a key signal for conduction between the two terminals through the pull-up resistor circuit or the pull-down resistor circuit.

According to an embodiment, although not separately illustrated, the key signal generation circuit of the third key signal generator 1010 may include a DC (direct current) power supply (or DC power module), a first electrical path, a second electrical path, a third electrical path, the two terminals, and/or at least one resistor. The DC power supply is a component configured to supply direct current (DC) power and may, for example, convert alternating current (AC) power into direct current power (e.g., AC-DC converting), or convert DC power of one voltage level into DC power of another voltage level (e.g., DC-DC converting). The DC power supply may be battery-powered. The first electrical path may electrically connect the DC power supply and one of the terminals. The second electrical path may electrically connect the other terminal and a ground structure of the slidable electronic device 2. The third electrical path may electrically connect the second electrical path and the processor (e.g., the processor 120 of FIG. 1). In an embodiment, at least one resistor may be disposed on the third electrical path as a pull-up resistor, and the third key signal generator 1010 may be interpreted as a "pull-up resistor circuit." In the pull-up resistor circuit, when conduction occurs between the two terminals due to the pressing of the third key 3111, a DC signal output from the DC power supply may be transmitted to the processor through the at least one resistor, and the processor may detect a high signal (e.g., 5V). In another embodiment, the at least one resistor may be disposed on a path between a connection point with the third electrical path in the second electrical path and a ground structure of the slidable electronic device 2 as a pull-down resistor, and the third key signal generator 1010 may be interpreted as a "pull-down resistor circuit." In the pull-down resistor circuit, when conduction occurs between the two terminals due to the pressing of the key, a DC signal output from the DC power supply may be transmitted to the ground structure of the slidable electronic device 2 through the at least one resistor, and the processor may detect a low signal (e.g., 0V).

According to various embodiments, a combination of the third key 3111 and a key signal generation circuit of the third key signal generator 1010 may be implemented to generate a key signal based on changes in various physical properties, such as electrical, magnetic, or optical characteristics, when touched or pressed by a dielectric (e.g., a finger) (not illustrated). The slidable electronic device 2 may include, for example, a sensor circuit related to the third key 3111. The sensor circuit may include a detection element included in or positioned at the third key 3111, and a sensor (or sensor integrated circuit (IC)) electrically connected to the detection element. The sensor may output an electrical signal (e.g., a key signal) related to user input to a processor (e.g., the processor 120 of FIG. 1) based on a change in physical properties obtained from the detection element.

According to various embodiments, the detection element included in the sensor circuit related to the third key 3111 may include a strain gauge. Displacement (strain) of a resistor (e.g., a resistance wire) included in the strain gauge may occur due to external pressure (stress) applied to the key. Such displacement may change the resistance of the resistor. The sensor may output a key signal related to user input to the processor (e.g., the processor 120 of FIG. 1) based on a change in resistance obtained from the strain gauge. In various embodiments, the sensor circuit including the detection element and the sensor may be implemented based on other physical properties (e.g., capacitance or magnetic force).

In an embodiment, the third key 3111 and the third key signal generator 1010 may be disposed on or coupled to the support 1020. The support 1020 may support the third key 3111 and the third key signal generator 1010.

According to an embodiment, the support 1020 may be disposed on or coupled to the sixth side wall 206 (see FIG. 8).

According to various embodiments, a combination of the third key 3111, the third key signal generator 1010, and the support 1020 may be disposed on or coupled to a bracket (not illustrated), and the bracket may be disposed on or coupled to the second housing 22 (see FIG. 4) or the sixth side wall 206 (see FIG. 8). The bracket may be interpreted as a structural element (e.g., a connector) configured to connect the combination of the third key 3111, the third key signal generator 1010, and the support 1020 to the second housing 22 (see FIG. 4) or the sixth side wall 206 (see FIG. 8).

According to an embodiment, the third flexible printed circuit board 1030 may extend from or be connected to the third key signal generator 1010.

In an embodiment, a single or integrated circuit board (e.g., an FPCB or a rigid-flexible printed circuit board (RFPCB)) may be provided (or formed) to replace both a circuit board (not illustrated) of the third key signal generator 1010 and the third flexible printed circuit board 1030.

According to an embodiment, the first connector 1040 may be disposed on the third flexible printed circuit board 1030. The third flexible printed circuit board 1030 may extend from one end connected to the third key signal generator 1010 to the other end where the first connector 1040 is disposed.

According to an embodiment, the third flexible printed circuit board 1030 may be electrically connected to the second printed circuit board 45 (see FIG. 5) through a connection between the first connector 1040 and the second connector (e.g., the second connector 1122 of FIG. 11) on the second printed circuit board 45.

According to an embodiment, a key signal generated from the third key signal generator 1010 may be transmitted to the second printed circuit board 45 (see FIG. 5) through the third flexible printed circuit board 1030 and the first connector 1040. The key signal may be transmitted to the processor (e.g., the processor 120 of FIG. 1) disposed on the first printed circuit board 44 (see FIG. 5) that is electrically connected to the second printed circuit board 45.

According to an embodiment, the conductive path 1050 may be disposed on the third flexible printed circuit board 1030.

According to various embodiments, the third flexible printed circuit board 1030 may be implemented to include the conductive path 1050.

According to an embodiment, the third terminal T3 may be disposed on the support 1020.

According to an embodiment, the third terminal T3 may be in physical contact with the first terminal T1 (see FIG. 8) of the conductive region 8 (see FIG. 8). The third terminal T3 may be electrically connected to the first connector 1040 through the conductive path 1050. One end of the conductive path 1050 may be electrically connected to the third terminal T3, and the other end of the conductive path 1050 may be electrically connected to a fifth terminal (not separately illustrated) among the plurality of terminals of the first connector 1040. A combination of the third terminal T3, the conductive path 1050, and the fifth terminal of the first connector 1040 may be included in or defined/interpreted as a first line portion (e.g., the first line portion 1112 of FIG. 11) of the transmission line 801 (see FIG. 8), which is included in the third key input module 311.

According to an embodiment, the wireless communication circuit 800 (see FIG. 8) disposed on the second printed circuit board 45 (see FIG. 5) or disposed on the first printed circuit board 44 (see FIG. 5) electrically connected to the second printed circuit board 45 may provide an electromagnetic signal (or wireless signal, RF signal, or radiated current) to the conductive region 8 (see FIG. 8) through the third terminal T3, the conductive path 1050, and the first connector 1040.

According to an embodiment, the fourth terminal T4 may be disposed on the support 1020.

According to an embodiment, the fourth terminal T4 may be electrically connected to a ground region (e.g., the ground region G of FIG. 11) included in the third key input module 311, or may be implemented as a portion of the ground region. The fourth terminal T4 may be in physical contact with the second terminal T2 (see FIG. 8) of the conductive region 8 (see FIG. 8). The conductive region 8 may be electrically connected to a ground region of the third key input module 311 through physical contact between the second terminal T2 and the fourth terminal T4.

According to an embodiment, the ground region (e.g., the ground region G of FIG. 11) of the third key input module 311 may include a first ground region included in a circuit board (not separately illustrated) of the third key signal generator 1010 and a second ground region (not separately illustrated) included in the third flexible printed circuit board 1030. The ground region of the third key input module 311 may be electrically connected to ground regions of the first printed circuit board 44 (see FIG. 5) and the second printed circuit board 45 (see FIG. 5) through a connection between the first connector 1040 and the second printed circuit board 45 (see FIG. 5).

According to various embodiments, the third terminal T3 may include a first flexible conductor (or first flexible conductive portion or first flexible conductive member) (not separately illustrated), or the first flexible conductor may be disposed between the third terminal T3 and the first terminal T1 (see FIG. 8) of the conductive region 8 (see FIG. 8). The fourth terminal T4 may include a second flexible conductor (or second flexible conductive portion or second flexible conductive member) (not separately illustrated), or the second flexible conductor may be disposed between the fourth terminal T4 and the second terminal T2 (see FIG. 8) of the conductive region 8. The first flexible conductor and/or the second flexible conductor may include, for example, a conductive clip (e.g., a conductive structure including an elastic structure), a pogo pin, a spring, a conductive poron, a conductive sponge, a conductive rubber, a conductive tape, or a conductive connector.

According to an embodiment, the third key input module 311 may include a matching circuit (e.g., the matching circuit 1112 of FIG. 11) disposed on a circuit board (not separately illustrated) of the third key signal generator 1010. The matching circuit 1112 may be disposed in, or electrically connected to, a first line portion (e.g., the first line portion 1112 of FIG. 11) of a transmission line 801 (see FIG. 8), which is included in the third key input module 311. The matching circuit may substantially match the impedance of the transmission line 801 (see FIG. 8) and the impedance of the conductive region 8 (see FIG. 8). In various embodiments, the matching circuit may shift the resonant frequency of the conductive region 8 (see FIG. 8) to a predetermined frequency or by a predetermined amount.

FIG. 11 is a block diagram of a slidable electronic device 2 according to an embodiment of the disclosure. It is to be understood in the disclosure that all the combinations of features and/or embodiments disclosed with reference to FIG. 11 are conceived and included. That is, all of the combinations of features described below with reference to FIG. 11 are to be considered as being included in the disclosure as specific examples.

Referring to FIG. 11, the slidable electronic device 2 may include a conductive region 8, a third key input module 311, and/or a printed circuit board assembly (PCBA) (or printed circuit pack or printed board assembly (PBA)) 1120. The third key input module 311 may be electrically connected to the PCBA 1120. The conductive region 8 may be electrically connected to the PCBA 1120 through the third key input module 311.

According to an embodiment, the conductive region 8 may include a first opening (or first slot) 6 and a second opening (or second slot) 7. The conductive region 8 may include a first terminal T1 including a feeding point FP (see FIG. 8) and a second terminal T2 including a ground point GP (see FIG. 8). For example, the first terminal T1 and the second terminal T2 may be electrically connected to the third key input module 311.

According to an embodiment, the third key input module 311 may include a key signal generation circuit 1111, a first line portion 1112, a matching circuit 1113, a ground region G, a first connector 1040, a third terminal T3, and/or a fourth terminal T4. Although not illustrated in FIG. 11, the third key input module 311 may include a third key 3111 (see FIG. 6) positioned in the first opening 6 of the conductive region 8.

According to an embodiment, the key signal generation circuit 1111 of the third key input module 311 may generate a key signal in response to pressing or touching of the third key 3111 (see FIG. 6). The key signal generation circuit 1111 may be electrically connected to the first connector 1040. The key signal generation circuit 1111 may be included in the third key signal generator 1010 of FIG. 10.

According to an embodiment, the first line portion 1112 of the third key input module 311 may include a portion of the transmission line 801 through which an electromagnetic signal from the wireless communication circuit 800 is transmitted to the conductive region 8 and which is included in the third key input module 311. The first line portion 1112 may electrically connect the third terminal T3 and the first connector 1040. For example, the conductive path 1050 of FIG. 10 may be included in the first line portion 1112.

According to an embodiment, the matching circuit 1113 of the third key input module 311 may be disposed in the first line portion 1112. The matching circuit 1113 may substantially match the impedance of the transmission line 801 and the impedance of the conductive region 8. In various embodiments, the matching circuit 1113 may shift the resonant frequency of the conductive region 8 to a predetermined frequency or by a predetermined amount. The matching circuit 1113 may be included in the third key signal generator 1010 of FIG. 10.

According to an embodiment, the ground region G of the third key input module 311 may be electrically connected to the fourth terminal T4. The ground region G may be at least partially disposed in the third key signal generator 1010 of FIG. 10.

According to an embodiment, the connector 1040 of the third key input module 311 may be electrically connected to the key signal generation circuit 1111. The connector 1040 may be electrically connected to the first line portion 1112.

According to an embodiment, the third terminal T3 of the third key input module 311 may be in physical contact with the first terminal T1 of the conductive region 8. The first line portion 1112 may be electrically connected to the conductive region 8 through physical contact between the first terminal T1 and the third terminal T3.

According to an embodiment, the fourth terminal T4 of the third key input module 311 may be in physical contact with the second terminal T2 of the conductive region 8. The ground region G may be electrically connected to the conductive region 8 through physical contact between the second terminal T2 and the fourth terminal T4.

According to an embodiment, the PCBA 1120 may include a processor 1121 (e.g., the processor 120 of FIG. 1), a second connector 1122, a wireless communication circuit 800 (e.g., the wireless communication module 192 of FIG. 1), and/or a second line portion 1123. The second connector 1122 may be electrically connected to the processor 1121 and the wireless communication circuit 800. The processor 1121 may be electrically connected to the wireless communication circuit 800.

According to an embodiment, the PCBA 1120 may include a combination of one or more printed circuit boards, one or more electrical components disposed on the one or more printed circuit boards, and/or one or more structural components (or mechanical components) disposed on the one or more printed circuit boards.

According to an embodiment, the PCBA 1120 may include one or more printed circuit boards (e.g., the first printed circuit board 44 and the second printed circuit board 45 of FIG. 5) that are electrically connected. Multiple electrical components such as the processor 1121, the second connector 1122, and/or the wireless communication circuit 800 may be disposed on the one or more printed circuit boards. For example, the processor 1121 and the wireless communication circuit 800 may be disposed on the first printed circuit board 44 of FIG. 5, and the connector 1122 may be disposed on the second printed circuit board 45 of FIG. 5.

According to an embodiment, a key signal generated from the key signal generation circuit 1111 of the third key input module 311 may be provided to the processor 1121 of the PCBA 1120 through a connection between the first connector 1040 of the third key input module 311 and the second connector 1122 of the PCBA 1120. The processor 1121 may be configured to perform an operation (or function) corresponding to the key signal from the third key input module 311.

According to an embodiment, the wireless communication circuit 800 of the PCBA 1120 may be electrically connected to the first line portion 1112 of the third key input module 311 through a connection between the first connector 1040 of the third key input module 311 and the second connector 1122 of the PCBA 1120.

According to an embodiment, the second line portion 1123 of the PCBA 1120 may include a portion of the transmission line 801, through which an electromagnetic signal from the wireless communication circuit 800 is transmitted to the conductive region 8 and which is included in the PCBA 1120. The second line portion 1123 may electrically connect the wireless communication circuit 800 and the second connector 1122. The second line portion 1123 may be electrically connected to the first line portion 1112 of the third key input module 311 through a connection between the first connector 1040 of the third key input module 311 and the second connector 1122 of the PCBA 1120.

According to an embodiment, the wireless communication circuit 800 of the PCBA 1120 may provide (or feed) an electromagnetic signal (or wireless signal, RF signal, or radiated current) to the conductive region 8 through the transmission line 801 including the first line portion 1112 of the third key input module 311 and the second line portion 1123 of the PCBA 1120, and the conductive region 8 may radiate an electromagnetic wave.

According to various embodiments, although not illustrated, the matching circuit 1113 may be disposed in the second line portion 1123.

According to an embodiment, the processor 1121 of the PCBA 1120 may perform an operation or function related to a signal transmitted and/or received by the wireless communication circuit 800 through the conductive region 8.

According to an embodiment, the first terminal T1 and the second terminal T2 of the conductive region 8 may be positioned on opposite sides of the first opening 6. When an electromagnetic signal (or wireless signal, RF signal, or radiated current) is provided (or fed) to the first terminal T1, an electromagnetic field (electric field and magnetic field) that resonates the conductive region 8 around the first opening 6 (or radiates an electromagnetic wave through the first opening 6) may be provided (or formed) due to a potential difference between the first terminal T1 and the second terminal T2.

According to an embodiment, the first terminal T1 and the second terminal T2 of the conductive region 8 may be positioned substantially in the middle of the lengthwise direction in which the first opening 6 extends.

According to various embodiments, the second terminal T2, which includes the ground point GP (see FIG. 8), and the wire (or line) that electrically connects the second terminal T2 to the ground region G may be omitted. For example, the conductive region 8 may be interpreted as being grounded as a portion of a ground structure (not separately illustrated) of the slidable electronic device 2, which is implemented as a radiating portion and includes a combination of one or more grounds.

According to an embodiment, the length L over which the first opening 6 extends may be provided (or formed) to be substantially half of the wavelength of the electromagnetic wave (λ/2).

According to an embodiment, when an electromagnetic signal (or wireless signal, RF signal, or radiated current) is provided (or fed) to the first terminal T1 of the conductive region 8, the conductive region 8 may radiate an electromagnetic wave through the first opening 6 and the second opening 7. A combination of a first beam pattern (e.g., the first beam pattern 902 of FIG. 9) due to the first opening 6, a second beam pattern (e.g., the second beam pattern of FIG. 9) due to the second opening 7, and a third beam pattern (e.g., the third beam pattern 903 of FIG. 9) may be formed, and may have improved coverage compared to a comparative example in which the second opening 7 is omitted.

According to various embodiments, although not separately illustrated, the first terminal T1 and the second terminal T2 of the conductive region 8 may be positioned on opposite sides of the second opening 7. For example, the first terminal T1 may be positioned at the edge of the second opening 7 to correspond to a region between the first opening 6 and the second opening 7. When an electromagnetic signal (or wireless signal, RF signal, or radiated current) is provided (or fed) to the first terminal T1, an electromagnetic field (electric field and magnetic field) that resonates the second opening 7 (or radiates an electromagnetic wave through the second opening 7) may be provided (or formed) due to a potential difference between the first terminal T1 and the second terminal T2. When an electromagnetic signal is provided (or fed) to the first terminal T1, the conductive region 8 may radiate an electromagnetic wave through the first opening 6 and the second opening 7.

According to various embodiments, the shape of the first opening 6 and/or the second opening 7 is not limited to the illustrated examples and may vary, so that, when power is fed, the conductive region 8 may radiate an electromagnetic wave with improved coverage through the combination of the first opening 6 and the second opening 7.

In the disclosure, the first opening 6 of the conductive region 8 is disclosed as being used as a key hole where the third key 3111 (see FIG. 6) of the third key input module 311 is positioned. However, the use of the first opening 6 is not limited thereto, and various other modules (not separately illustrated) including the first line portion 1112 may utilize the first opening 6.

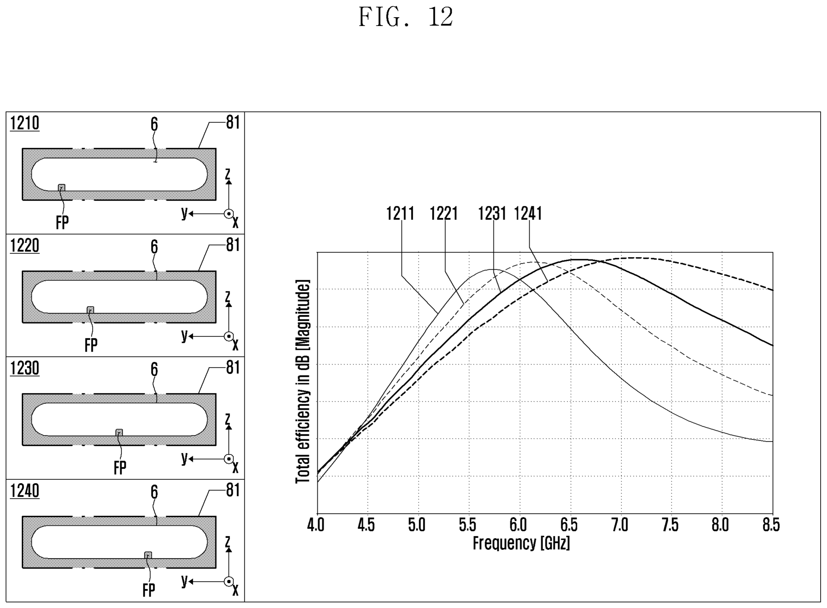

FIG. 12 is a view illustrating graphs representing the antenna radiating performance of a first conductive region 81 including a first opening 6, depending on the position of a feeding point FP, according to various embodiments of the disclosure.

Referring to FIG. 12, in exemplary embodiments 1210, 1220, 1230, and 1240, the position of the feeding point FP may be differently implemented. Although not separately illustrated in FIG. 12, the first conductive region 81 may include a ground point GP (see FIG. 8) that is electrically connected to a ground region (e.g., the ground region G of FIG. 11) of the third key input module 311. In the exemplary embodiments 1210, 1220, 1230, and 1240, the position of the ground point GP (see FIG. 8) on the first conductive region 81 may be fixed. Graph 1211 illustrates the antenna radiating performance of the first conductive region 81 according to the exemplary embodiment 1210. Graph 1221 illustrates the antenna radiating performance of the first conductive region 81 according to the exemplary embodiment 1220. Graph 1231 illustrates the antenna radiating performance of the first conductive region 81 according to the exemplary embodiment 1230. Graph 1241 illustrates the antenna radiating performance of the first conductive region 81 according to the exemplary embodiment 1240. Depending on the position of the feeding point FP, the resonant frequency of the first conductive region 81 may vary. Accordingly, the antenna radiating performance of the first conductive region 81 may vary in a selected or predetermined frequency band (e.g., UWB with a center frequency of about 6.2 GHz).

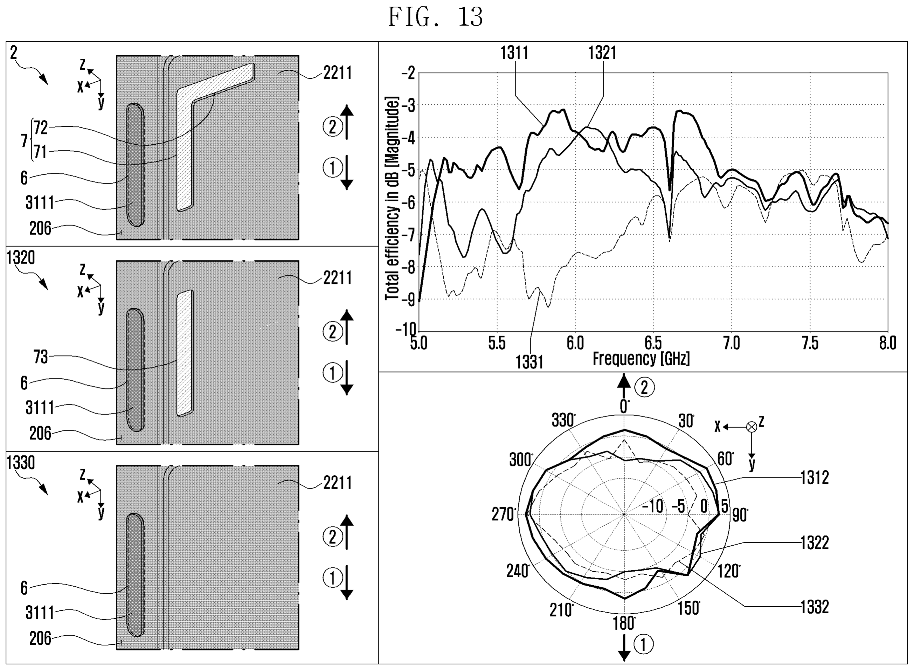

FIG. 13 is a view illustrating a partial perspective view of a slidable electronic device 2 according to an embodiment of the disclosure, a partial perspective view of a slidable electronic device 1320 according to a first comparative example, a partial perspective view of a slidable electronic device 1330 according to a second comparative example, and graphs and radiating patterns representing the antenna radiating performance of the respective slidable electronic devices.

Referring to FIG. 13, the slidable electronic device 2 according to an embodiment of the disclosure may include a first opening 6 formed in a sixth side wall 206, a second opening 7 formed in a second support portion 2211, and a third key 3111 positioned in the first opening 6. The second opening 7 may include a first portion 71 and a second portion 72. The slidable electronic device 1320 according to the first comparative example may include a second opening 73, which includes the first portion 71 of the second opening 7 but does not include the second portion 72 of the second opening 7, compared to the slidable electronic device 2 according to an embodiment of the disclosure. The slidable electronic device 1330 according to the second comparative example may not include the second opening 7, as compared to the slidable electronic device 2 according to an embodiment of the disclosure. Graph 1311 illustrates the antenna radiating performance of the slidable electronic device 2 according to an embodiment of the disclosure. Graph 1321 illustrates the antenna radiating performance of the slidable electronic device 1320 according to the first comparative example. Graph 1331 illustrates the antenna radiating performance of the slidable electronic device 1330 according to the second comparative example. Graph 1312 illustrates the radiating pattern of the slidable electronic device 2 according to an embodiment of the disclosure. Graph 1322 illustrates the radiating pattern of the slidable electronic device 1320 according to the first comparative example. Graph 1332 illustrates the radiating pattern of the slidable electronic device 1330 according to the second comparative example.

The slidable electronic device 2 according to an embodiment of the disclosure may improve antenna radiating performance in a selected or predetermined frequency band (e.g., UWB with a center frequency of about 6.2 GHz) due to a third radiating pattern 903 (see FIG. 9) radiated from a second partial conductive region 822 (see FIG. 9) that includes the second portion 72 of the second opening 7, as compared to the slidable electronic device 1320 according to the first comparative example. The slidable electronic device 2 according to an embodiment of the disclosure may improve directivity and/or coverage in a first direction ① (e.g., the +y-axis direction at 180 degrees) and a second direction ② (e.g., the -y-axis direction at 0 degrees) due to the third radiating pattern 903 (see FIG. 9) radiated from the second partial conductive region 822 (see FIG. 9) that includes the second portion 72 of the second opening 7, as compared to the slidable electronic device 1320 according to the first comparative example.

The slidable electronic device 2 according to an embodiment of the disclosure may improve antenna radiating performance in a selected or predetermined frequency band (e.g., UWB with a center frequency of about 6.2 GHz) due to radiating patterns (e.g., the second radiating pattern 902 and the third radiating pattern 903 in FIG. 9) radiated from the second conductive region 82 (see FIG. 9) including the second opening 7, as compared to the slidable electronic device 1330 according to the second comparative example. The slidable electronic device 2 according to an embodiment of the disclosure may improve directivity and/or coverage in the first direction ① (e.g., +y-axis direction at 180 degrees) and the second direction ② (e.g., -y-axis direction at 0 degrees) due to radiating patterns (e.g., the second radiating pattern 902 and the third radiating pattern 903 in FIG. 9) radiated from the second conductive region 82 (see FIG. 9) including the second opening 7, as compared to the slidable electronic device 1320 according to the first comparative example.

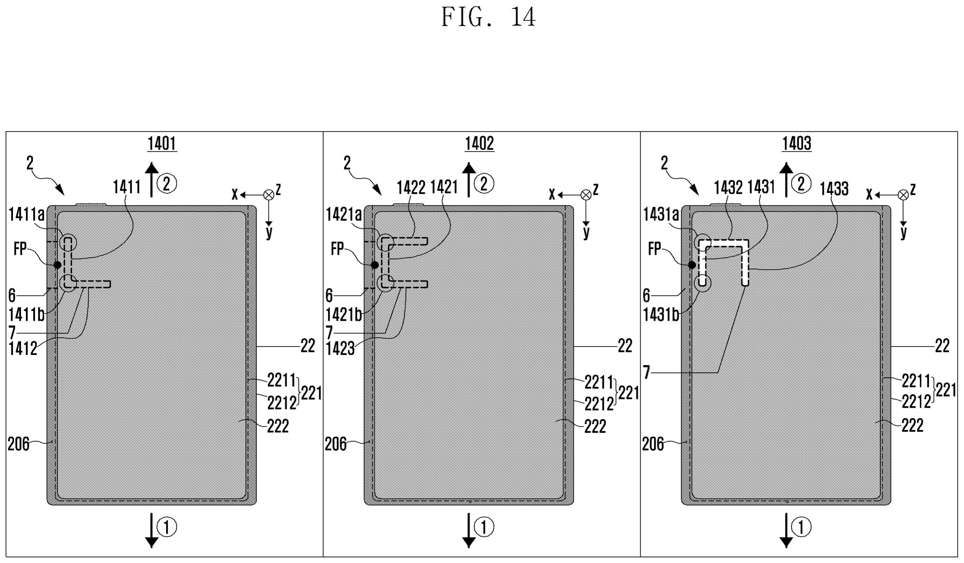

FIG. 14 illustrates views of slidable electronic devices according to various embodiments of the disclosure. It is to be understood that the disclosure conceives and includes all of the combinations of features and/or embodiments disclosed with reference to FIG. 14. That is, all of the combinations of features described below with reference to FIG. 14 are to be considered as being included in the disclosure as specific examples.

One exemplary slidable electronic device may be obtained by changing at least some of a plurality of components of another exemplary slidable electronic device, and may be interpreted as being included in the scope of various embodiments of the disclosure. In connection with the description of one exemplary slidable electronic device, the same terminologies and/or the same reference numerals may be used for components that are at least partially identical, similar, or related to components of another exemplary slidable electronic device. In any two exemplary slidable electronic devices, two components with the same terminology but different reference numerals may be understood as being substantially the same as each other or being changed or modified in form.

Referring to FIG. 14, the slidable electronic device 2 may include a second housing 22. The second housing 22 may include a second frame 221 and a second cover 222. The second frame 221 may include a second support portion 2211 and a second side 2212. The slidable electronic device 2 may include a first opening 6 provided (or formed) in the sixth side wall 206 of the second side portion 2212. The slidable electronic device 2 may include a second opening 7 provided (or formed) in the second support portion 2211.

According to an embodiment, the second opening 7 may be covered by the second cover 222 and may not be visible from the outside.

According to an embodiment, when the wireless communication circuit 800 (see FIG. 8) provides (or feeds) an electromagnetic signal (or wireless signal, an RF signal, or a radiated current) to a feeding point FP of the second frame 2211, the conductive region 8 of the second frame 2211, which includes the first opening (e.g., a first slot) 6 and the second opening (e.g., a second slot) 7, may function as a radiating portion (or antenna radiating portion, radiator, or antenna radiator) that radiates electromagnetic waves.

In the slidable electronic device 2 according to a first exemplary embodiment 1401, the second opening 7 may include a first portion 1411 and a second portion 1412. When viewed from above the second cover 222, the first portion 1411 may extend in a first direction ① from a first end 1411a to a second end 1411b. The first portion 1411 of the first opening 6 and the second opening 7 may be substantially parallel. When viewed from above the second cover 222, the second portion 1412 may extend from the second end 1411b of the first portion 1411 in a direction that is not parallel to the first direction ①. In an embodiment, when viewed from above the second cover 222, the second portion 1412 may be substantially perpendicular to the first portion 1411.

According to an embodiment, when power is fed to the feeding point FP, the first portion 1411 of the second opening 7 may be supplied with the electromagnetic signal (or wireless signal, RF signal, or radiated current). The electromagnetic signal may flow from the first portion 1411 to the second portion 1412. When it is difficult for a first beam pattern 901 (see FIG. 9) radiated from a first conductive region 81 (see FIG. 9) including the first opening 6 to ensure directivity and/or coverage (or communication range) in the first direction ① and the second direction ②, this may be complemented and/or ensured by a third beam pattern (e.g., the third beam pattern 903 in FIG. 9) radiated from a second partial conductive region (e.g., the second partial conductive region 822 in FIG. 9) including the second portion 1412 of the second opening 7.

In the slidable electronic device 2 according to the second exemplary embodiment 1402, the second opening 7 may include a first portion 1421, a second portion 1422, and/or a third portion 1423. When viewed from above the second cover 222, the first portion 1421 may extend in a first direction ① from a first end 1421a to a second end 1421b. The first portion 1421 of the first opening 6 and the second opening 7 may be substantially parallel. When viewed from above the second cover 222, the second portion 1422 may extend from the first end 1421a of the first portion 1421 in a direction that is not parallel to the first direction ①. When viewed from above the second cover 222, the third portion 1423 may extend from the second end 1421b of the first portion 1421 in a direction that is not parallel to the first direction ①. In an embodiment, when viewed from above the second cover 222, the second portion 1422 and the third portion 1432 may be substantially perpendicular to the first portion 1421.

According to an embodiment, when power is fed to the feeding point FP, the first portion 1421 of the second opening 7 may be supplied with the electromagnetic signal (or wireless signal, RF signal, or radiated current). The electromagnetic signal may flow from the first portion 1421 to the second portion 1422 and the third portion 1423. When it is difficult for a first beam pattern 901 (see FIG. 9) radiated from the first conductive region 81 (see FIG. 9) including the first opening 6 to ensure directivity and/or coverage (or communication range) in the first direction ① and the second direction ②, this may be complemented and/or ensured by a third beam pattern 903 (e.g., the third beam pattern 903 in FIG. 9) radiated from a second partial conductive region (e.g., the second partial conductive region 822 in FIG. 9) including the second portion 1422 of the second opening 7 and a fourth beam pattern (e.g., the third beam pattern 903 in FIG. 9) radiated from a third partial conductive region including the third portion 1423 of the second opening 7.

In the slidable electronic device 2 according to the third exemplary embodiment 1403, the second opening 7 may include a first portion 1431, a second portion 1432, and/or a third portion 1433. When viewed from above the second cover 222, the first portion 1431 may extend in a first direction ① from a first end 1431a to a second end 1431b. The first portion 1431 of the first opening 6 and the second opening 7 may be substantially parallel. When viewed from above the second cover 222, the second portion 1432 may extend from the first end 1431a of the first portion 1431 in a direction that is not parallel to the first direction ①. When viewed from above the second cover 222, the third portion 1433 may extend from the second portion 1432 in a direction that is not parallel to the second portion 1432. The second portion 1432 may connect the first portion 1431 and the third portion 1433. In an embodiment, when viewed from above the second cover 222, the second portion 1432 may be substantially perpendicular to the first portion 1431, and the third portion 1433 may be substantially parallel to the first portion 1431.

According to an embodiment, when power is fed to the feeding point FP, the first portion 1431 of the second opening 7 may be supplied with the electromagnetic signal (or wireless signal, RF signal, or radiated current). The electromagnetic signal may flow from the first portion 1431 to the second portion 1432 and the third portion 1433. When it is difficult for a first beam pattern 901 (see FIG. 9) radiated from a first conductive region 81 (see FIG. 9) including the first opening 6 to ensure directivity and/or coverage (or communication range) in the first direction ① and the second direction ②, this may be complemented and/or ensured by a third beam pattern (e.g., the third beam pattern 903 in FIG. 9) radiated from a second partial conductive region (e.g., the second partial conductive region 822 in FIG. 9) including the second portion 1432 of the second opening 7.

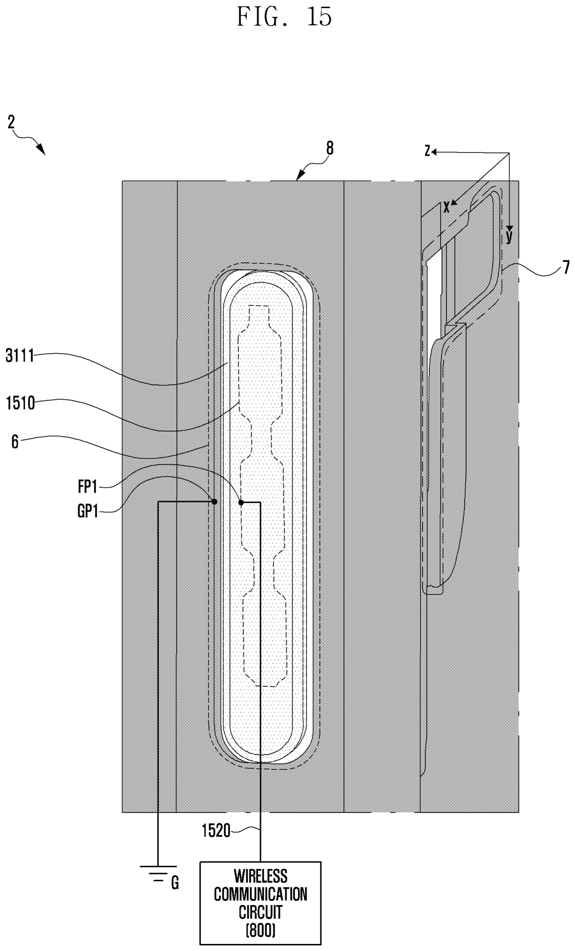

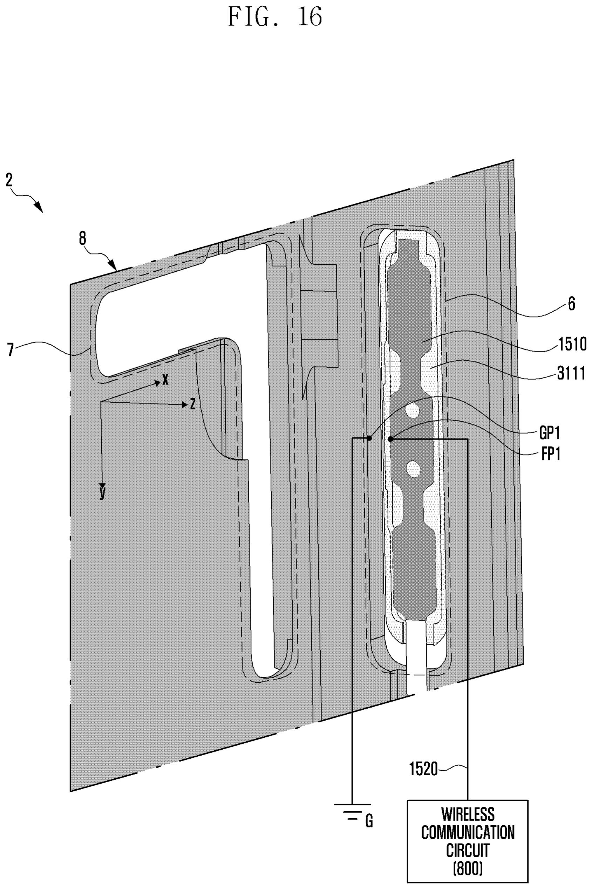

FIGS. 15 and 16 are views illustrating a portion of a slidable electronic device 2 according to an embodiment of the disclosure. It is to be understood that the disclosure conceives and includes all of the combinations of features and/or embodiments disclosed with reference to FIGS. 15 and 16. That is, all of the combinations of features described below with reference to FIGS. 15 and 16 are to be considered as being included in the disclosure as specific examples.

Referring to FIGS. 15 and 16, the slidable electronic device 2 may include a conductive region 8, a third key 3111, a conductive pattern 1510, and/or a wireless communication circuit 800 (e.g., the wireless communication module 192 of FIG. 1).

According to an embodiment, the conductive region 8 may include a first opening 6 and a second opening 7.

According to an embodiment, the conductive pattern 1510 may be included in the third key input module 311 (see FIG. 6). The conductive pattern 1510 may be, for example, disposed on or coupled to the third key 3111. The conductive pattern 1510 may be, for example, disposed on a support 1020 (see FIG. 10).

According to an embodiment, the third key 3111 and/or the support 1020 (see FIG. 10) supporting the conductive pattern 1510 may include a non-conductive material.

According to an embodiment, the conductive pattern 1510 may be positioned to correspond to the first opening 6 of the conductive region 8. At least a portion of the conductive pattern 1510 may be inserted into, for example, the first opening 6.

According to an embodiment, when viewed toward a sixth side wall 206 (see FIG. 6) (e.g., when viewed in the -x-axis direction), the conductive pattern 1510 may be positioned inside an edge of the first opening 6.

According to various embodiments, the conductive pattern 1510 may be defined or interpreted as at least a part of a conductor, conductive structure, metal body, or metal structure positioned to correspond to the first opening 6 of the conductive region 8 in the third key input module 311 (see FIG. 6). The shape of the conductive pattern 1510 is not limited to the illustrated example and may vary.

According to an embodiment, the conductive pattern 1510 and the conductive region 8 may be physically separated from each other.

According to an embodiment, the conductive pattern 1510 may be electrically connected to the wireless communication circuit 800 through a transmission line 1520. The wireless communication circuit 800 may provide (or feed) an electromagnetic signal (or wireless signal, RF signal, or radiated current) to the conductive pattern 1510 through a first feeding point FP 1 on the conductive pattern 1510 via the transmission line 1520.

According to an embodiment, when the wireless communication circuit 800 provides (or feeds) an electromagnetic signal (or wireless signal, RF signal, or radiated current) to the first feeding point FP1 of the conductive pattern 1510, an electromagnetic wave may be radiated through electromagnetic coupling between the conductive pattern 1510 and the conductive region 8. The conductive pattern 1510 and the conductive region 8 may operate as a radiating portion (or antenna radiating portion, radiator, or antenna radiator) that provides (or forms) an electromagnetic field (or radiating field) capable of transmitting and/or receiving an electromagnetic wave in a selected or predetermined frequency band when power is fed to the first feeding point FP1.

According to an embodiment, the conductive region 8 may be electrically connected to a ground region G.

According to an embodiment, a first ground point GP1 (e.g., the ground point GP in FIG. 8), which is electrically connected to the ground region G of the conductive region 8, may be positioned at an edge of the first opening 6.

According to an embodiment, the first feeding point FP1 of the conductive pattern 1510 and the first ground point GP1 of the conductive region 8 may be positioned on opposite sides so as to substantially face each other.

According to various embodiments, the positions or number of first feeding points FP1 or the positions or number of first ground points GP1 are not limited to the illustrated example and may vary.

According to various embodiments, the relative position between the first feeding point FP1 and the first ground point GP1 is not limited to the illustrated example and may vary.

According to various embodiments, the first ground point GP1 and a wire (or line) electrically connecting the first ground point GP1 and the ground region G may be omitted. For example, the conductive region 8 may be interpreted as being grounded as a portion of a ground structure (not separately illustrated) of the slidable electronic device 2, which is implemented as a radiating portion and includes a combination of one or more grounds.

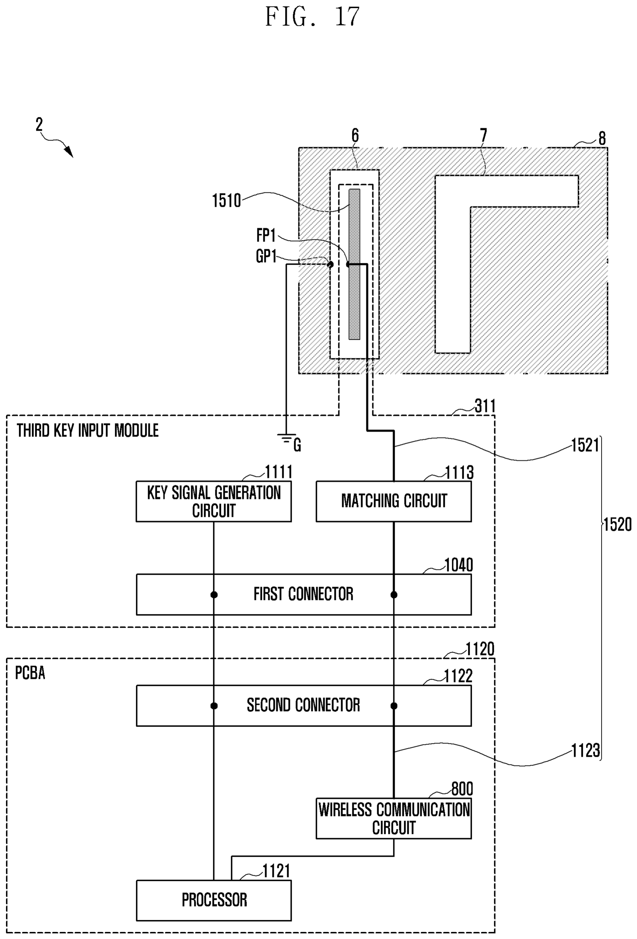

FIG. 17 is a block diagram of a slidable electronic device 2 according to an embodiment of the disclosure. It is to be understood in the disclosure that all the combinations of features and/or embodiments disclosed with reference to FIG. 17 are conceived and included. That is, all of the combinations of features described below with reference to FIG. 17 are to be considered as being included in the disclosure as specific examples.

Referring to FIG. 17, the slidable electronic device 2 may include a conductive region 8, a third key input module 311, and/or a PCBA 1120.

Descriptions of at least one of the components among the multiple components disclosed in FIG. 17 that have already been described with reference to previous drawings will be omitted.

According to an embodiment, the conductive region 8 may include a first opening 6 and a second opening 7.

According to an embodiment, the third key input module 311 may include a key signal generation circuit 1111, a conductive pattern 1510, a third line portion 1521, a matching circuit 1113, a ground region G, and/or a first connector 1040.

According to an embodiment, the conductive pattern 1510 of the third key input module 311 may be electrically connected to the first connector 1040 through the third line portion 1521.

According to an embodiment, the third line portion 1521 of the third key input module 311 may include a portion of the transmission line 1520 through which an electromagnetic signal from the wireless communication circuit 800 is transmitted to the conductive pattern 1510 and which is included in the third key input module 311. For example, the conductive path 1050 of FIG. 10 may be included in the third line portion 1521.

According to an embodiment, the matching circuit 1113 of the third key input module 311 may be disposed in the third line portion 1521. The matching circuit 1113 may substantially match the impedance of the transmission line 1520 and the impedance of a radiating portion including the conductive pattern 1510 and the conductive region 8. In various embodiments, the matching circuit 1113 may shift the resonance frequency of the radiating portion including the conductive pattern 1510 and the conductive region 8 to a predetermined frequency or by a predetermined amount.

According to an embodiment, the ground region G of the third key input module 311 may be electrically connected to the conductive region 8. The conductive region 8 and the ground region G may be electrically connected, for example, through physical contact between the second terminal T2 and the fourth terminal T4 in FIG. 11.

According to an embodiment, the PCBA 1120 may include a processor 1121 (e.g., the processor 120 of FIG. 1), a second connector 1122, a wireless communication circuit 800 (e.g., the wireless communication module 192 of FIG. 1), and/or a second line portion 1123. The second line portion 1123 may include a portion of the transmission line 1520, through which an electromagnetic signal from the wireless communication circuit 800 is transmitted to the conductive pattern 1510, and which is included in the PCBA 1120.

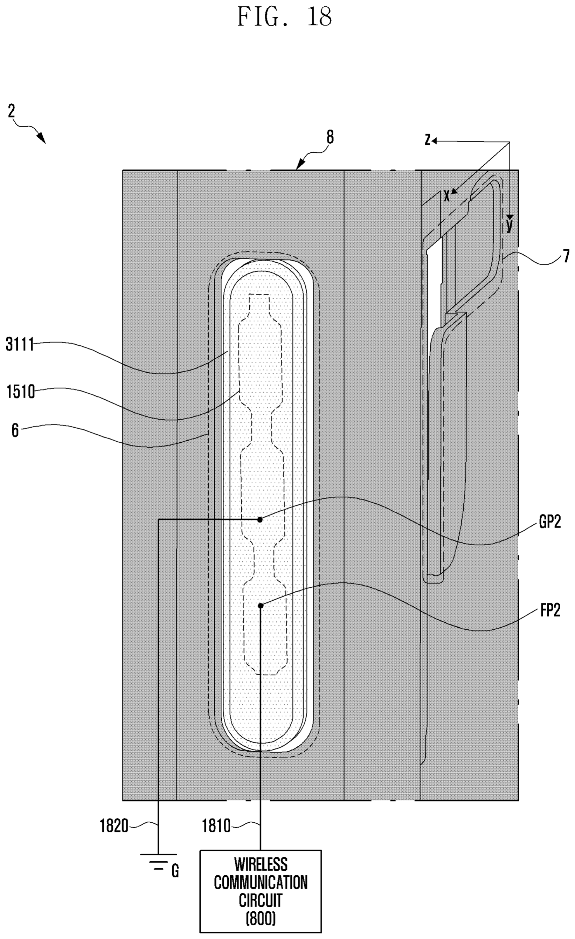

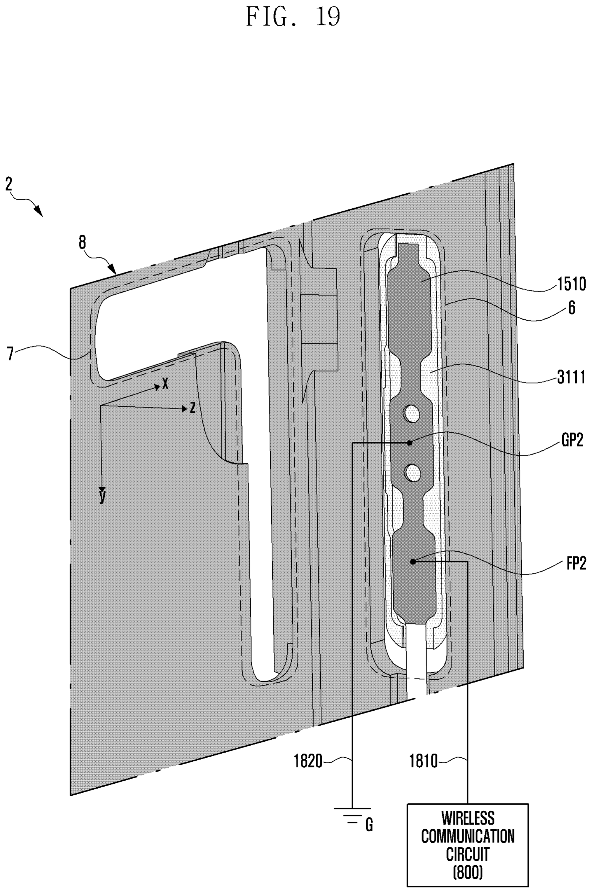

FIGS. 18 and 19 are views illustrating a portion of a slidable electronic device 2 according to an embodiment of the present disclosure. It should be understood that all combinations of the features and/or embodiments disclosed in connection with FIGS. 18 and 19 are contemplated and included in the disclosure. That is, all of the combinations of features described below with reference to FIGS. 18 and 19 are to be considered as being included in the disclosure as specific examples.

Referring to FIGS. 18 and 19, the slidable electronic device 2 may include a conductive region 8, a third key 3111, a conductive pattern 1510, and/or a wireless communication circuit 800 (e.g., the wireless communication module 192 of FIG. 1).

According to an embodiment, the conductive region 8 may include a first opening 6 and a second opening 7.

According to an embodiment, the conductive pattern 1510 may be included in the third key input module 311 (see FIG. 6). The conductive pattern 1510 may be, for example, disposed on or coupled to the third key 3111. The conductive pattern 1510 may be, for example, disposed on a support 1020 (see FIG. 10).

According to an embodiment, the third key 3111 and/or the support 1020 (see FIG. 10) supporting the conductive pattern 1510 may include a non-conductive material.

According to an embodiment, the conductive pattern 1510 may be positioned to correspond to the first opening 6 of the conductive region 8. At least a portion of the conductive pattern 1510 may be inserted into, for example, the first opening 6.

According to an embodiment, when viewed toward a sixth side wall 206 (see FIG. 6) (e.g., when viewed in the -x-axis direction), the conductive pattern 1510 may be positioned inside an edge of the first opening 6.

According to various embodiments, the conductive pattern 1510 may be defined or interpreted as at least a part of a conductor, conductive structure, metal body, or metal structure positioned to correspond to the first opening 6 of the conductive region 8 in the third key input module 311 (see FIG. 6). The shape of the conductive pattern 1510 is not limited to the illustrated example and may vary.

According to an embodiment, the conductive pattern 1510 and the conductive region 8 may be physically separated from each other.

According to an embodiment, the conductive pattern 1510 may be electrically connected to the wireless communication circuit 800 through a transmission line 1810. The wireless communication circuit 800 may provide (or feed) an electromagnetic signal (or wireless signal, RF signal, or radiated current) to the conductive pattern 1510 through a first feeding point FP1 on the conductive pattern 1510 via the transmission line 1810.

According to various embodiments, the positions or number of second feeding points FP2 are not limited to the illustrated example and may vary.

According to an embodiment, the conductive pattern 1510 may be electrically connected to the ground region G through a ground line 1820.

According to various embodiments, the positions or number of second ground points GP2 on the conductive pattern 1510 that is electrically connected to the ground line 1820 are not limited to the illustrated example and may vary.

According to an embodiment, when the wireless communication circuit 800 provides (or feeds) an electromagnetic signal (or wireless signal, RF signal, or radiated current) to the second feeding point FP2 of the conductive pattern 1510, the conductive pattern 1510 may operate as an inverted F antenna (IFA) or a planar IFA (PIFA).

According to an embodiment, when the wireless communication circuit 800 provides (or feeds) an electromagnetic signal (or wireless signal, RF signal, or radiated current) to the second feeding point FP2 of the conductive pattern 1510, an electromagnetic wave may be radiated through electromagnetic coupling between the conductive pattern 1510 and the conductive region 8. The conductive pattern 1510 and the conductive region 8 may operate as a radiating portion (or antenna radiating portion, a radiator, or an antenna radiator) that provides (or forms) an electromagnetic field (or radiating field) capable of transmitting and/or receiving an electromagnetic wave in a selected or predetermined frequency band when power is fed to the second feeding point FP2.

According to various embodiments, the second ground point GP2 and a wire (or line) electrically connecting the second ground point GP2 and the ground region G may be omitted.

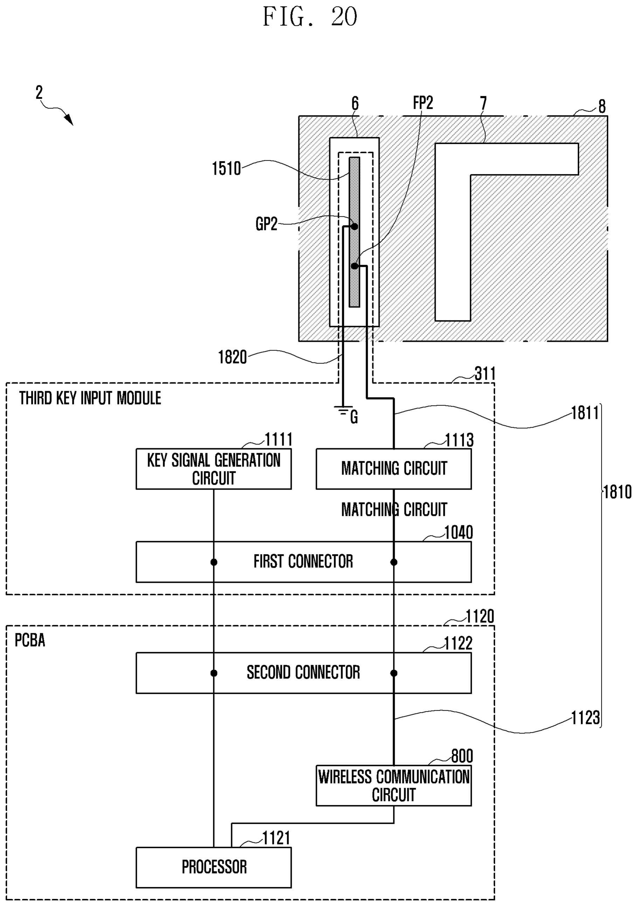

FIG. 20 is a block diagram of a slidable electronic device 2 according to an embodiment of the disclosure. It is to be understood in the disclosure that all the combinations of features and/or embodiments disclosed with reference to FIG. 20 are conceived and included. That is, all of the combinations of features described below with reference to FIG. 20 are to be considered as being included in the disclosure as specific examples.

Referring to FIG. 20, the slidable electronic device 2 may include a conductive region 8, a third key input module 311, and/or a PCBA 1120.

Descriptions of at least one of the components among the multiple components disclosed in FIG. 20 that have already been described with reference to previous drawings will be omitted.

According to an embodiment, the conductive region 8 may include a first opening 6 and a second opening 7.

According to an embodiment, the third key input module 311 may include a key signal generation circuit 1111, a conductive pattern 1510, a fourth line portion 1811, a matching circuit 1113, a ground region G, a ground line 1820, and/or a first connector 1040.

According to an embodiment, the conductive pattern 1510 of the third key input module 311 may be electrically connected to the first connector 1040 through the fourth line portion 1811.

According to an embodiment, the fourth line portion 1811 of the third key input module 311 may include a portion of the transmission line 1810, through which an electromagnetic signal from the wireless communication circuit 800 is transmitted to the conductive pattern 1510 and which is included in the third key input module 311. For example, the conductive path 1050 of FIG. 10 may be included in the fourth line portion 1811.

According to an embodiment, the matching circuit 1113 of the third key input module 311 may be disposed in the fourth line portion 1811. The matching circuit 1113 may substantially match the impedance of the transmission line 1810 and the impedance of a radiating portion including the conductive pattern 1510 and the conductive region 8. In various embodiments, the matching circuit 1113 may shift the resonance frequency of the radiating portion including the conductive pattern 1510 and the conductive region 8 to a predetermined frequency or by a predetermined amount.

According to an embodiment, the ground region G of the third key input module 311 may be electrically connected to the conductive pattern 1510 through the ground line 1820.

According to an embodiment, the ground line 1820 may include a combination of one or more conductors that electrically connect the conductive pattern 1510 and the ground region G of the third key input module 311.

According to various embodiments, the ground line 1820 may include a flexible conductor (e.g., a conductive clip, pogo pin, spring, conductive polyurethane foam, conductive sponge, conductive rubber, conductive tape, or conductive connector) between the conductive pattern 1510 and the ground region G.

According to an embodiment, the PCBA 1120 may include a processor 1121 (e.g., the processor 120 of FIG. 1), a second connector 1122, a wireless communication circuit 800 (e.g., the wireless communication module 192 of FIG. 1), and/or a second line portion 1123. The second line portion 1123 may include a portion of the transmission line 1520, through which an electromagnetic signal from the wireless communication circuit 800 is transmitted to the conductive pattern 1510, and which is included in the PCBA 1120.

According to various embodiments, although not separately illustrated, the conductive region 8, which includes a first conductive region (e.g., a first slot radiator, a first slot radiating portion, or a first slot radiating region) 81 (see FIG. 9) based on the first opening 6 and a second conductive region (e.g., a second slot radiator, a second slot radiating portion, or a twelfth slot radiating region) 82 (see FIG. 9) based on the second opening 7, may be implemented not only in the slidable electronic device 2 but also in various other types of devices such as a bar-type (or plate-type) electronic device or a foldable electronic device. An embodiment disclosed in FIG. 11, an embodiment disclosed in FIG. 17, or an embodiment disclosed in FIG. 20 may be implemented not only in a slidable electronic device 2 but also in various other types of devices such as a bar-type (or plate-type) electronic device or a foldable electronic device.

According to various embodiments, although not separately illustrated, the bar-type electronic device may include a housing and a display module disposed on the housing. The housing may provide (or form) at least a portion of a front surface, a rear surface, and a side surface of the bar-type electronic device. The display module may be positioned inside the housing and may be visible through the front surface of the bar-type electronic device. The housing may include a frame and a cover disposed on the frame. The frame may include a side portion that forms at least a portion of the side surface of the bar-type electronic device and a support portion extending from the side and positioned inside the bar-type electronic device. The cover may provide (or form) at least a portion of the rear surface of the bar-type electronic device. The frame may include a conductive region (e.g., the conductive region 8 of FIG. 8) extending from a portion included in the side portion to another portion included in the support portion. The wireless communication circuit (e.g., the wireless communication circuit 800 of FIG. 8) may be configured to transmit and/or receive a signal in a selected or predetermined frequency band through the conductive region. The conductive region may include a first opening (e.g., the first opening 6 of FIG. 8) positioned in the side portion and a second opening (e.g., the second opening 7) positioned in the support portion. The first opening may be used as a keyhole.

According to various embodiments, although not separately illustrated, the foldable electronic device may include a foldable housing and a flexible display module disposed on the foldable housing. The foldable housing may include a first housing, a second housing, and a hinge portion connecting the first housing and the second housing. The flexible display module may extend from the first housing to the second housing. The foldable electronic device may be implemented in an in-folding type in which the flexible display module is folded inward, or in an out-folding type in which the flexible display module is folded outward. The first housing may include a first frame and a first cover disposed on the first frame. The second housing may include a second frame and a second cover disposed on the second frame. The first frame may include a first side portion forming at least a portion of a first side surface of the foldable electronic device, and a first support portion extending from the first side portion and positioned inside the foldable electronic device. The first cover may provide (or form) at least a portion of one rear surface of the foldable electronic device. The second frame may include a second side portion forming at least a portion of a second side surface of the foldable electronic device, and a second support portion extending from the second side portion and positioned inside the foldable electronic device. The second cover may provide (or form) at least a portion of the other rear surface of the foldable electronic device. The first frame may include a first conductive region extending from a portion included in the first side portion to another portion included in the first support portion. The second frame may include a second conductive region extending from a portion included in the second side portion to another portion included in the second support portion. The first conductive region or the second conductive region may be implemented to be at least partially the same as or similar to the conductive region 8 of FIG. 8. A wireless communication circuit (e.g., the wireless communication circuit 800 of FIG. 8) may be configured to transmit and/or receive a signal of a selected or predetermined frequency band through the first conductive region and/or the second conductive region. The first conductive region may include a first opening positioned in the first side portion (e.g., the first opening 6 of FIG. 8) and a second opening positioned in the first support portion (e.g., the second opening 7). The first opening may be used as a keyhole. The second conductive region may include a third opening (e.g., the first opening 6 of FIG. 8) positioned in the second side portion and a fourth opening (e.g., the second opening 7) positioned in the second support portion. The third opening may be used as a keyhole.

According to an exemplary embodiment of the disclosure, an electronic device (e.g., a slidable electronic device 2) includes a frame (e.g., the second frame 221) and a wireless communication circuit 800. The frame includes a side portion (e.g., a second side portion 2212) configured to form at least a portion of a side surface of the electronic device. The frame includes a support portion (e.g., the second support portion 2211) extending from the side portion and positioned inside the electronic device. The frame includes a conductive region 8 extending from one portion included in the side portion to another portion included in the support portion. The wireless communication circuit is configured to transmit and/or receive a signal of a selected or predetermined frequency band through the conductive region. The conductive region 8 includes a first opening 6 positioned in the side portion and a second opening 7 positioned in the support portion.

According to an exemplary embodiment, when power is supplied from the wireless communication circuit 800 to the conductive region 8, the conductive region 8 may radiate an electromagnetic wave through the first opening 6 and the second opening 7.

According to an exemplary embodiment of the disclosure, the second opening 7 may include a first portion 71 extending in substantially the same direction as the first opening 6, and a second portion 72 extending in a direction perpendicular to the direction in which the first portion 71 extends.

According to an exemplary embodiment of the disclosure, the electronic device (e.g., the slidable electronic device 2) may further include a key (e.g., a third key 3111) positioned in the first opening 6.

According to an exemplary embodiment of the disclosure, the electronic device (e.g., the slidable electronic device 2) may include a key input module (e.g., the third key input module 311) including the key (e.g., the third key 3111). The key input module may include a key signal generator (e.g., the third key signal generator 1010), a support 1020, a flexible printed circuit board (e.g., the third flexible printed circuit board 1030), a first terminal (e.g., the third terminal T3), and a conductive path 1050. The key signal generator may be configured to generate a key signal in response to pressing or touching of the key. The support 1020 may support the key and the key signal generator and may be disposed on the frame (e.g., the second frame 221). The flexible printed circuit board may extend from or be connected to the key signal generator. The first terminal (e.g., the third terminal T3) may be disposed on the support 1020 and may be in physical contact with the conductive region 8. The conductive path 1050 may be disposed on or included in the flexible printed circuit board and may be electrically connected to the first terminal (e.g., the third terminal T3). The conductive region 8 may be electrically connected to the wireless communication circuit 800 through the first terminal (e.g., the third terminal T3) and the conductive path 1050.

According to an exemplary embodiment of the disclosure, the key input module (e.g., the third key input module 311) may include a second terminal (e.g., the fourth terminal T4) disposed on the support 1020. The second terminal may be in physical contact with the conductive region 8. The second terminal may be electrically connected to a ground region G at least partially included in the key signal generator 1010. The first terminal (e.g., the third terminal T3) and the second terminal (e.g., the fourth terminal T4) may be positioned at an edge of the first opening 6 and may be arranged on opposite sides with the first opening 6 interposed therebetween.

According to an exemplary embodiment of the disclosure, the electronic device (e.g., the slidable electronic device 2) may include a matching circuit 1113 included in the key signal generator 1010. The matching circuit 1113 may be electrically connected to the conductive path 1050.

According to an exemplary embodiment of the disclosure, in the conductive region 8, a feeding point FP, which is configured to receive an electromagnetic signal from the wireless communication circuit 800, may be positioned between the first opening 6 and the second opening 7.

According to an exemplary embodiment of the disclosure, the feeding point FP may be positioned at an edge of the first opening 6 to correspond to a region between the first opening 6 and the second opening 7.

According to an exemplary embodiment of the disclosure, the feeding point FP may be positioned at an edge of the second opening 7 to correspond to a region between the first opening 6 and the second opening 7.

According to an exemplary embodiment of the disclosure, the first opening 6 may extend to a length corresponding to half of a wavelength of the signal in the selected or predetermined frequency band.

According to an exemplary embodiment of the disclosure, the electronic device (e.g., the slidable electronic device 2) may further include a key input module (e.g., the third key input module 311) including a key (e.g., the third key 3111) positioned in the first opening 6. The key input module may include a conductive pattern 1510 positioned to correspond to the first opening 6. The conductive pattern 1510 may be physically separated from the conductive region 8. The wireless communication circuit 800 may provide an electromagnetic signal to the conductive pattern 1510. When the electromagnetic signal is provided to the conductive pattern 1510, the conductive pattern 1510 and the conductive region 8 may be electromagnetically coupled.

According to an exemplary embodiment of the disclosure, the electronic device (e.g., the slidable electronic device 2) may further include a non-conductive cover (e.g., the second cover 222). The non-conductive cover may be disposed on the support portion (e.g., the second support portion 2211) and may form at least a portion of a rear surface of the electronic device. The non-conductive cover may cover the second opening 7.

According to an exemplary embodiment of the disclosure, the selected or predetermined frequency band may include UWB.

According to an exemplary embodiment of the disclosure, the electronic device (e.g., the slidable electronic device 2) may further include a first housing 21, a second housing 22, and a flexible display module 24. The second housing 22 may include a frame (e.g., the second frame 221) and may be slidable with respect to the first housing 21. The flexible display module 24 may include a first region ⓐ and a second region ⓑ extending from the first region ⓐ. The first region ⓐ may be disposed on the first housing 21 and may be visible. The second region ⓑ may be slid out from or slid into an inner space of the electronic device as the second housing 22 slides.

According to an exemplary embodiment of the disclosure, the frame (e.g., the second frame 221) may further include a non-conductive portion (not separately illustrated) at least partially disposed in the second opening 7.

According to an exemplary embodiment of the disclosure, an electronic device (e.g., a slidable electronic device 2) includes a frame (e.g., the second frame 221) and a wireless communication circuit 800. The frame includes a side portion (e.g., a second side portion 2212) configured to form at least a portion of a side surface of the electronic device. The frame includes a support portion (e.g., the second support portion 2211) extending from the side portion and positioned inside the electronic device. The frame includes a conductive region 8 extending from one portion included in the side portion to another portion included in the support portion. The wireless communication circuit is configured to transmit and/or receive a signal of a selected or predetermined frequency band through the conductive region. The conductive region 8 includes a first opening 6 positioned in the side portion and a second opening 7 positioned in the support portion. The second opening 7 includes a first portion 71 extending in the same direction as the first opening 6, and a second portion 72 extending in a direction perpendicular to the direction in which the first portion 71 extends.

According to an exemplary embodiment, when power is supplied from the wireless communication circuit 800, the conductive region 8 may radiate an electromagnetic wave through the first opening 6 and the second opening 7.

According to an exemplary embodiment of the disclosure, the electronic device (e.g., the slidable electronic device 2) may further include a key (e.g., a third key 3111) positioned in the first opening 6.

According to an exemplary embodiment of the disclosure, the electronic device (e.g., the slidable electronic device 2) may include a key input module (e.g., the third key input module 311) including the key (e.g., the third key 3111). The key input module may include a key signal generator (e.g., the third key signal generator 1010), a support 1020, a flexible printed circuit board (e.g., the third flexible printed circuit board 1030), a first terminal (e.g., the third terminal T3), and a conductive path 1050. The key signal generator may be configured to generate a key signal in response to pressing or touching of the key. The support 1020 may support the key and the key signal generator and may be disposed on the frame (e.g., the second frame 221). The flexible printed circuit board may extend from or be connected to the key signal generator. The first terminal (e.g., the third terminal T3) may be disposed on the support 1020 and may be in physical contact with the conductive region 8. The conductive path 1050 may be disposed on or included in the flexible printed circuit board and may be electrically connected to the first terminal (e.g., the third terminal T3). The conductive region 8 may be electrically connected to the wireless communication circuit 800 through the first terminal (e.g., the third terminal T3) and the conductive path 1050.

According to an exemplary embodiment of the disclosure, in the conductive region 8, a feeding point FP, which is configured to receive an electromagnetic signal from the wireless communication circuit 800, may be positioned at an edge of the first opening 6 to correspond to a region between the first opening 6 and the second opening 7.

Embodiments disclosed in the disclosure and drawings are merely presented as specific examples to easily describe technical content and aid understanding of the disclosure, and are not intended to limit the scope of the disclosure. Accordingly, the scope of the various embodiments of the disclosure should be construed as including changes or modifications of the embodiments in addition to the embodiments disclosed herein. In addition, it will be appreciated that any embodiment(s) described herein may be used with any other embodiment(s) described herein. In particular, it is emphasized that although the disclosure is presented in a form that provides a number of embodiments, some of the embodiments are linked only by reference to the same drawing or drawings. The disclosure is to be understood to include all of the combinations of two (or more) embodiments unless there is an obvious contradiction therebetween. That is, when features are presented as optional in the disclosure, all of the combinations of those optional features are included in the disclosure.

## Claims

1. An electronic device (2) comprising:
a frame (221) comprising a side portion (2212) configured to form at least a portion of a side surface of the electronic device (2), and a support portion (2211) extending from the side portion (2212) and positioned inside the electronic device (2), wherein the frame (221) further comprises a conductive region (8) extending from a portion included in the side portion (2212) to another portion included in the support portion (2211); and
a wireless communication circuit (800) configured to transmit and/or receive a signal of a selected or predetermined frequency band through the conductive region (8),
wherein the conductive region (8) comprises a first opening (6) positioned in the side portion (2212) and a second opening (7) positioned in the support portion (2211).

2. The electronic device of claim 1, wherein, when power is supplied from the wireless communication circuit (800), the conductive region (8) radiates an electromagnetic wave of the signal through the first opening (6) and the second opening (7).

3. The electronic device of claim 1 or 2, wherein the second opening (7) comprises a first portion (71) extending in a same direction as the first opening (6), and a second portion (72) extending in a direction perpendicular to the direction in which the first portion (71) extends.

4. The electronic device of any one of claims 1 to 3, further comprising:
a key (3111) positioned in the first opening (6).

5. The electronic device of claim 4,
a key input module (311) comprising the key (3111),
wherein the key input module (311) comprises:
a key signal generator (1010) configured to generate a key signal in response to pressing or touching of the key (3111);
a support (1020) configured to support the key (3111) and the key signal generator (1010), and positioned on the frame (221);
a flexible printed circuit board (1030) extending from or connected to the key signal generator (1010);
a first terminal (T3) positioned on the support (1020) and in physical contact with the conductive region (8); and
a conductive path (1050) disposed on or included in the flexible printed circuit board (1030) and electrically connected to the first terminal (T3), and
wherein the conductive region (8) is electrically connected to the wireless communication circuit (800) through the first terminal (T3) and the conductive path (1050).

6. The electronic device of claim 5, wherein the key input module (311) further comprises a second terminal (T4) disposed on the support (1020) and in physical contact with the conductive region (8),
wherein the second terminal (T4) is electrically connected to a ground region (G) at least partially included in the key signal generator (1010), and
wherein the first terminal (T3) and the second terminal (T4) are positioned at an edge of the first opening (6) and are disposed on opposite sides with the first opening (6) interposed therebetween.

7. The electronic device according to claim 5,
a matching circuit (1113) included in the key signal generator (1010) and electrically connected to the conductive path (1050).

8. The electronic device of any one of claims 1 to 7, wherein, in the conductive region (8), a feeding point (FP) configured to receive an electromagnetic signal from the wireless communication circuit (800) is positioned between the first opening (6) and the second opening (7).

9. The electronic device of claim 8, wherein the feeding point (FP) is positioned at an edge of the first opening (6) to correspond to a region between the first opening (6) and the second opening (7).

10. The electronic device of any one of claims 1 to 9, wherein the first opening (6) extends to a length corresponding to half of a wavelength of the signal in the selected or predetermined frequency band.

11. The electronic device of any one of claims 1 to 3, further comprising:
a key input module (311) comprising a key (3111) positioned in the first opening (6),
wherein the key input module (311) comprises a conductive pattern (1510) positioned to correspond to the first opening (6),
wherein the conductive pattern (1510) is physically separated from the conductive region (8),
wherein the wireless communication circuit (800) is configured to provide an electromagnetic signal to the conductive pattern (1510), and
wherein, when the electromagnetic signal is provided to the conductive pattern (1510), the conductive pattern (1510) and the conductive region (8) are electromagnetically coupled.

12. The electronic device of any one of claims 1 to 11, further comprising:
a non-conductive cover (222) disposed on the support portion (2211) and configured to form at least a portion of a rear surface of the electronic device (2),
wherein the non-conductive cover (222) covers the second opening (7).

13. The electronic device of any one of claims 1 to 12, wherein the selected or predetermined frequency band comprises ultra-wideband (UWB).

14. The electronic device of any one of claims 1 to 13, further comprising:
a first housing (21);
a second housing (22) configured to slide with respect to the first housing (21) and comprising the frame (221); and
a flexible display module (24) comprising a first region (ⓐ) and a second region (ⓑ) extending from the first region (ⓐ),
wherein the first region (ⓐ) is disposed on the first housing (21) to be visible, and
wherein the second region (ⓑ) is slid out from or slid into an inner space of the electronic device (2) as the second housing (22) slides.

15. The electronic device of any one of claims 1 to 14, wherein the frame (221) further comprises a non-conductive portion at least partially disposed in the second opening (7).
